# EUROPÄISCHE PATENTSCHRIFT

(11) **EP 3 227 349 B1**
(45) Veröffentlichungstag und Bekanntmachung des Hinweises auf die Patenterteilung: **06.05.2020**
(21) Anmeldenummer: 15798065.7
(22) Anmeldetag: 20.11.2015
(51) Int. Cl.: C08F 230/08, C09D 143/04, C08F 220/14

(54) **PIGMENTIERTES BESCHICHTUNGSMITTEL UND DARAUS HERGESTELLTE BESCHICHTUNGEN**
PIGMENTED COATING AGENT AND COATINGS PRODUCED FROM SAME
AGENT DE REVÊTEMENT PIGMENTÉ ET REVÊTEMENTS FABRIQUÉS À PARTIR DE CELUI-CI

(30) Priorität: 02.12.2014 EP 14195876
(43) Veröffentlichungstag der Anmeldung: 11.10.2017
(73) Patentinhaber: BASF Coatings GmbH, 48165 Münster (DE)
(72) Erfinder: POPPE, Andreas, 48324 Sendenhorst (DE); LÖW, Norbert, 91413 Neustadt a.d. Aisch (DE); CORTEN, Cathrin, 59423 Unna (DE); SCHNIEDERS, Britta, 49716 Meppen (DE); HU, Wei Qiu, Shanghai 200032 (CN)
(74) Vertreter: BASF IP Association
(86) Internationale Anmeldenummer: PCT/EP2015/077177
(87) Internationale Veröffentlichungsnummer: WO 2016/087226

(56) Entgegenhaltungen:
- EP-A1- 0 997 511
- EP-A1- 1 092 757
- EP-A2- 1 184 434
- US-A- 5 300 571
- US-A- 5 723 516
- US-A- 5 886 125
- US-A1- 2003 170 468
- US-A1- 2008 076 868
- DATABASE CA [Online] CHEMICAL ABSTRACTS SERVICE, COLUMBUS, OHIO, US; CHEN, JUN ET AL: "Polyether-modified silicone-acrylate flexible resin-containing waterproof coating and its preparation", XP002741577, gefunden im STN Database accession no. 2011:1011390 & CN 102 146 247 A (WUHAN XINKANG CHEMICAL GROUP CO., LTD., PEOP. REP. CHINA) 10. August 2011 (2011-08-10)
- DATABASE CA [Online] CHEMICAL ABSTRACTS SERVICE, COLUMBUS, OHIO, US; LIU, XINGUANG: "Organosilicon-containing vinyl copolymer coating and its preparation method", XP002741578, gefunden im STN Database accession no. 2010:833544 & CN 101 760 094 A (PEOP. REP. CHINA) 30. Juni 2010 (2010-06-30)
- DATABASE CA [Online] CHEMICAL ABSTRACTS SERVICE, COLUMBUS, OHIO, US; SHIIKI, HISASHI ET AL: "Thermosetting resin compositions for automobile topcoating materials", XP002741579, gefunden im STN Database accession no. 1993:126601 & JP H42 26181 A (DAINIPPON INK AND CHEMICALS, INC., JAPAN) 14. August 1992 (1992-08-14)

## Beschreibung

Die vorliegende Erfindung betrifft ein lösemittelbasiertes, pigmentiertes Beschichtungsmittel enthaltend ein spezielles Copolymer (A), welches durch Copolymerisation einer Mischung von olefinisch ungesättigten Monomeren (a) in mindestens einem organischen Lösemittel erhältlich ist, wobei die Mischung der Monomeren (a) 10 bis 60 mol-% mindestens eines speziellen Monomers (a1) mit einer Vinylsilangruppe enthält. Die vorliegende Erfindung betrifft zudem ein Verfahren zur Herstellung einer Mehrschichtbeschichtung unter Einsatz des lösemittelbasierten, pigmentierten Beschichtungsmittels sowie die so hergestellten Mehrschichtbeschichtungen.

### Stand der Technik

Die bekannten lösemittelbasierten, pigmentierten Beschichtungsmittel, insbesondere die sogenannten grundsätzlich bekannten Basislacke, werden beispielsweise in der Automobilindustrie zur Herstellung von ein- oder mehrschichtigen farb- und/oder effektgebenden Beschichtungen beziehungsweise Lackierungen eingesetzt. Insbesondere Mehrschichtlackierungen, in denen ein Klarlack über der Basislackschicht aufgebracht wird, weisen gute anwendungstechnische Eigenschaften auf.

Die stetig wachsenden Ansprüche des Marktes, insbesondere die Ansprüche der Automobilhersteller und ihrer Kunden, erfordern jedoch eine stetige Weiterentwicklung des bisher erreichten technischen und ästhetischen Niveaus.

Neben die technischen und ästhetischen Ansprüche an Lackierungen tritt heutzutage allerdings auch das immer wichtiger werdende ökologische Profil von bei der Herstellung von Lackierungen eingesetzten Beschichtungsmitteln wie beispielsweise Basislacken in den Vordergrund. Es stellt eine besondere Herausforderung dar, die geforderten anwendungstechnischen Eigenschaften der Lackierungen mit einer umweltfreundlichen Herstellung dieser Lackierungen beziehungsweise den zugrunde liegenden Beschichtungsmitteln zu vereinbaren.

Eine der relevantesten anwendungstechnischen Eigenschaften von pigmentierten Beschichtungsmitteln wie Basislacken und von daraus hergestellten Beschichtungen ist beispielsweise die gute Zwischenschichthaftung der jeweiligen Beschichtung in der Mehrschichtlackierung. Insbesondere zu nennen ist die Haftung der Basislackschicht, und zwar einerseits auf darunter angeordneten Substraten oder Beschichtungen, andererseits aber auch zu darauf aufgebrachten Klarlackschichten. Sowohl in der Erstlackierung (OEM) von Automobilen als auch im Rahmen der Automobilreparaturlackierung stellt das Erreichen einer zufriedenstellenden Haftung ein nicht immer einfach zu erreichendes Ziel dar. Dabei kann vor allem die Haftung zwischen dem bei der Reparaturlackierung eingesetzten Basislack und der Erstlackierung problematisch sein.

Von ebenfalls hoher Wichtigkeit ist die Steinschlagbeständigkeit einer Mehrschichtlackierung, das heißt die Beständigkeit einer Lackierung gegen mit hoher Geschwindigkeit auf die Lackierungsoberfläche schlagende Steine. Denn im Gebrauch sind Automobillackierungen gerade diesem Steinschlag sehr intensiv ausgesetzt.

Eine ebenfalls relevante Eigenschaft von Mehrschichtlackierungen, die insbesondere ihre mechanische Beständigkeit beeinflusst, ist die Härte des mehrschichtigen Aufbaus. Neben der Klarlackschicht stellt in diesem Zusammenhang beispielsweise auch die darunter angeordnete Basislackschicht einen relevanten Einflussfaktor dar.

Nochmals herausfordernder ist das Erreichen eines ausgewogenen Eigenschaftsprofils, das heißt die zeitgleiche Erzielung zufriedenstellender Ergebnisse hinsichtlich aller geforderten Eigenschaften. Denn selbstverständlich bedeutet das Nichterfüllen auch nur einer Spezifikation, dass die jeweilige Mehrschichtlackierung die Anforderungen insgesamt nicht erfüllt.

Im Stand der Technik sind zahlreiche pigmentierte Beschichtungsmittel, insbesondere Basislacke, bekannt, die gute anwendungstechnische Eigenschaften aufweisen. In der Regel enthalten diese Beschichtungsmittel ein Polymerisat als Bindemittel und einen Vernetzer. Als Vernetzer werden häufig Melaminharze, beispielsweise monomere Vernetzungsharze wie Hexa(methoxymethyl)melamin (HMMM) oder gemischt-veretherte Melamine eingesetzt. Der Einsatz dieser Vernetzer in nicht unerheblichen Mengen ist in vielen Fällen für das Erreichen guter anwendungstechnischer Eigenschaften zwingend notwendig.

Problematisch ist dabei, dass der Einsatz solcher Melaminharze durch das in diesen Harzen enthaltende Formaldehyd eine nicht unerhebliche ökologische Belastung mit sich bringt. Das schon angesprochene ökologische Profil dieser Beschichtungsmittel ist also stark verbesserungswürdig.

Von Vorteil wäre also ein pigmentiertes Beschichtungsmittel, in dem zumindest teilweise, wenn nicht vollständig, auf den Einsatz von Melaminharzen verzichtet werden kann, welches aber trotzdem die geforderten anwendungstechnischen Eigenschaften, insbesondere eine gute Zwischenschichthaftung, Steinschlagbeständigkeit und Härte, aufweist. Dabei müssten mögliche Ersatzkomponenten von Melaminharzen also einerseits so ausgestaltet sein, dass sie die grundsätzlichen vorteilhaften Eigenschaften der Melaminharze ebenfalls erfüllen können. Zum anderen müsste aber die Art und Menge solcher Komponenten so gewählt sein, dass zudem keine negativen Einflüsse auf andere Eigenschaften einer Lackierung resultieren. Denn bekanntermaßen können variierte Komponenten, je nach Art und eingesetzter Menge, beispielsweise zu Inkompatibilitäten führen, die letztlich ein negatives Eigenschaftsbild mit sich bringen können. Nochmals vorteilhafter wäre, wenn die zur Herstellung der Ersatzkomponenten eingesetzten Ausgangsmaterialien leicht zugänglich und günstig erhältlich sind. Auf diese Weise könnten ökologische und ökonomische Ziele zeitgleich erreicht werden.

Ein solches pigmentiertes Beschichtungsmittel wäre also in der Lage, die geforderten anwendungstechnischen Eigenschaften der daraus hergestellten Lackierungen mit einer umweltfreundlicheren und ökonomischeren Herstellung der Lackierungen zu vereinbaren.

US 5,886,125 offenbart Klarlacke, die ein Copolymer enthalten, welches unter Einsatz eines Monomers enthaltend Vinylsilangruppen hergestellt wird. Das Copolymer wird in organischen Lösemitteln hergestellt. In Beschichtungsmitteln wie Klarlacken wird es neben Vernetzungsmitteln wie Melaminharzen als Hauptbindemittel eingesetzt.

US 2003/0170468 A1 offenbart Klarlacke, die ebenfalls ein Copolymer enthalten, das unter Einsatz eines Monomers mit Vinylsilanfunktion in organischen Lösemitteln hergestellt wird. Die Klarlacke enthalten das bevorzugt hydroxyfunktionelle Copolymer als Hauptbindemittel. Zusätzlich ist als Vernetzer, insbesondere ein Melaminharz enthalten.

EP 0419669 A1 und EP 0318880 A1 offenbaren ein silanisiertes Copolymer und dessen Einsatz in Beschichtungsmitteln. Das Beschichtungsmittel wird explizit zur Herstellung pigmentierter Deckbeschichtungen eingesetzt. Das Beschichtungsmittel enthält das Copolymer neben einem hydroxyfunktionellen Harz als Hauptbindemittel.

Die US 2008/0076868 A1 offenbart ein Beschichtungsmittel, welches ein Carbamatfunktionelles Polymer (A), ein Vernetzungsmittel (B) sowie ein Säuregruppen-haltiges Polymer (C) enthält. Der Einsatz des Säuregruppen-haltigen Polymers (C) führt zu einer verbesserten Zwischenschichthaftung der Basislack- und Klarlackschicht.

### Aufgabe

Der vorliegenden Erfindung lag demnach die Aufgabe zugrunde, ein lösemittelbasiertes, pigmentiertes Beschichtungsmittel bereitzustellen, in welchem teilweise oder sogar vollständig auf den Einsatz von Melaminharzen verzichtet werden kann. Gleichzeitig sollte dessen Einsatz zur Herstellung von Mehrschichtlackierungen aber trotzdem zu hervorragenden anwendungstechnischen Eigenschaften der Mehrschichtlackierung führen. Insbesondere sollten gleichzeitig eine hervorragende Zwischenschichthaftung der durch Einsatz des Beschichtungsmittels hergestellten Schicht, eine gute Steinschlagfestigkeit sowie eine hohe Härte der Mehrschichtlackierung erreicht werden. Diese Eigenschaften sollten im Bereich der OEM Lackierung, bevorzugt auch im Rahmen der Automobilreparaturlackierung erreicht werden.

### Lösung

Es wurde gefunden, dass die oben genannten Aufgaben gelöst werden konnten durch ein lösemittelbasiertes, pigmentiertes Beschichtungsmittel enthaltend, bezogen auf die Gesamtmenge des Beschichtungsmittels, 0,02 bis 0,75 Gew.-% mindestens eines Copolymers (A), wobei das Copolymer (A) durch Copolymerisation einer Mischung von olefinisch ungesättigten Monomeren (a) in mindestens einem organischen Lösemittel erhältlich ist, die zu polymerisierende Mischung der Monomeren (a) aus
(a1) 10 bis 60 mol-% mindestens eines Monomers der folgenden Formel (I) 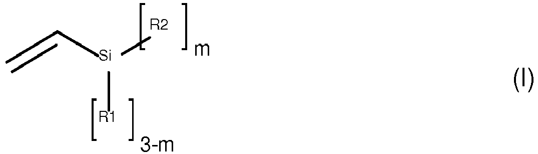 mit
   R₁ = C₁- bis C₄-Alkoxy, R₂ = C₁- bis C₄-Alkyl und m = 0 bis 2,
   sowie
(a2) 40 bis 90 mol-% mindestens eines weiteren olefinisch ungesättigten Monomers besteht
   und das Copolymer (A) eine Glasübergangstemperatur T_{g} von mindestens -30°C besitzt.

Das oben genannte Beschichtungsmittel wird in der Folge auch als erfindungsgemäßes Beschichtungsmittel bezeichnet und ist dementsprechend Gegenstand der vorliegenden Erfindung. Bevorzugte Ausführungsformen des erfindungsgemäßen Beschichtungsmittels sind der weiter unten folgenden Beschreibung sowie den Unteransprüchen zu entnehmen.

Weiterhin ist Gegenstand der vorliegenden Erfindung ein Verfahren zur Herstellung einer Lackierung unter Einsatz des erfindungsgemäßen Beschichtungsmittels.

Insbesondere ist Gegenstand der vorliegenden Erfindung ein Verfahren zur Herstellung einer Mehrschichtlackierung, bei dem
(1) mindestens ein Basislack auf ein Substrat aufgebracht wird,
(2) aus dem in Stufe (1) aufgebrachten Basislack ein Polymerfilm gebildet wird,
(3) auf die so erhaltene Basislackschicht mindestens ein Klarlack aufgebracht wird und anschließend
(4) die Basislackschicht zusammen mit dem in Stufe (3) aufgebrachten Klarlack gehärtet wird,
dadurch gekennzeichnet, dass als Basislack ein erfindungsgemäßes Beschichtungsmittel eingesetzt wird.

Zudem ist Gegenstand der vorliegenden Erfindung eine Lackierung, insbesondere Mehrschichtlackierung, die durch das erfindungsgemäße Verfahren hergestellt wurde.

Weiterhin ist ein Substrat, welches mit einer erfindungsgemäßen Lackierung, insbesondere Mehrschichtlackierung, beschichtet ist, Gegenstand der vorliegenden Erfindung.

Nicht zuletzt ist auch die Verwendung des erfindungsgemäßen Beschichtungsmittels zur Verbesserung der mechanischen Eigenschaften von Mehrschichtlackierungen, insbesondere der Zwischenschichthaftung, der Steinschlagbeständigkeit und Härte solcher Mehrschichtlackierungen, Gegenstand der vorliegenden Erfindung.

Es wurde gefunden, dass durch den Einsatz einer spezifisch abgestimmten Menge des Copolymers (A) ein pigmentiertes Beschichtungsmittel erhalten wird, welches durch den möglichen Ersatz von Melaminharzen und die damit resultierende Vermeidung von Formaldehydemissionen ein deutlich verbessertes ökologisches Profil aufweist und trotzdem bei Verwendung zur Herstellung von Lackierungen hervorragende anwendungstechnische Eigenschaften aufweist. Hinzu kommt noch, dass die bei der Herstellung des Copolymers (A) eingesetzten Monomere der Formel (I) deutlich leichter zugänglich und kostengünstiger sind, als andere Silangruppen-haltige olefinisch ungesättigte Monomere wie beispielsweise Acryl- oder Methacryloxyalkylsilane wie das häufig eingesetzte 3-Methacryloxypropyltrimethoxysilan. Auf diese Weise wird anwendungstechnische Qualität mit ökologischen und ökonomischen Vorteilen verknüpft.

### Beschreibung

In der Folge werden zunächst die erfindungsgemäße Mehrschichtlackierung sowie das Verfahren zu deren Herstellung beschrieben.

Die erfindungsgemäßen Mehrschichtlackierungen sind bevorzugt so aufgebaut, dass auf einem Substrat zunächst eine Grundierung aufgetragen worden ist. Darüber befindet sich bevorzugt mindestens eine Füllerlackierung eines Füllers sowie mindestens eine Basislackierung eines Basislacks und darüber mindestens eine Klarlackierung eines Klarlacks, wobei eine Klarlackierung beziehungsweise Klarlackschicht die oberste Schicht der Mehrschichtlackierung darstellt. Bevorzugt wird von den genannten Beschichtungsmitteln genau eines eingesetzt. Bevorzugt werden die einzelnen genannten Lackschichten direkt aufeinander aufgebracht. Bevorzugt ist also, dass eine Grundierungsschicht, eine Füllerschicht, eine Basislackschicht und eine Klarlackschicht jeweils direkt aufeinander aufgebracht werden. Die Basislackierung wird dabei durch Einsatz des erfindungsgemäßen Beschichtungsmittels hergestellt, das heißt bei dem erfindungsgemäßen Beschichtungsmittel handelt es sich bevorzugt um einen Basislack. Ebenso möglich ist es aber, dass auch die Füllerlackierung durch Einsatz des erfindungsgemäßen Beschichtungsmittels hergestellt wird; das erfindungsgemäße Beschichtungsmittel also auch als Füller eingesetzt wird.

Bei dem oben genannten Schichtaufbau handelt es sich um den gängig im Bereich der Automobillackierung eingesetzten Schichtaufbau. Die erfindungsgemäße Mehrschichtlackierung ist demnach bevorzugt eine Automobilmehrschichtlackierung.

Die gewählten Namen der einzelnen Schichten und Beschichtungsmittel sind dem Fachmann grundsätzlich geläufig. So ist beispielsweise bekannt, dass ein Füller beziehungsweise eine Füllerschicht hauptsächlich dem Schutz vor mechanischer Beanspruchung wie beispielsweise Steinschlag und zudem dem Ausfüllen von Unebenheiten des Substrats dient. Die Basislackschicht ist hauptverantwortlich für die Erzeugung von ästhetischen Eigenschaften wie der Farbe und/oder Effekten wie dem Flop und ist in der Regel direkt auf der Füllerschicht angeordnet.
Auch wenn tendenziell ein Füller- und ein Basislack gewisse technische Unterschiede aufweisen, die den genannten Anforderungsprofilen geschuldet sind, ist in dieser Hinsicht eine spezifische technische Abgrenzung weder notwendig noch gewollt. Es ist beispielsweise durchaus üblich, dass ein Füller einen deutlich höheren Gehalt an Pigmenten und insbesondere Füllstoffen sowie daraus folgend einen höheren Festkörperanteil besitzt als ein Basislack. Je nach individueller Anwendung können sich diese Unterschiede jedoch auch relativieren. Die Begriffe werden im Rahmen der vorliegenden Erfindung also lediglich der besseren Übersichtlichkeit halber verwendet. Entscheidend ist, dass ein beispielsweise als Basislack bezeichnetes Beschichtungsmittel die grundsätzliche Eignung aufweist, als Basislack eingesetzt werden zu können.

Aus dem oben Gesagten folgt, dass im Rahmen des erfindungsgemäßen Verfahrens bevorzugt vor dem Auftragen des Basislacks eine Grundierung sowie ein Füller auf ein Substrat aufgetragen werden. Demnach bedeutet die Angabe, dass ein Basislack auf ein Substrat aufgebracht wird (ohne die Spezifizierung "direkt"), nicht zwingend, dass der Basislack direkt auf das Substrat aufgebracht wird und damit ein direkter Kontakt zwischen Substrat und Basislackschicht bestehen muss. Ein solcher direkter Kontakt ist nur dann zwingend gegeben, wenn das Aufbringen als direktes Aufbringen spezifiziert ist.

Die Substrate sind üblicherweise mit einer Grundierung, bei metallischen Substraten beispielsweise einer Elektrotauchlackierung, insbesondere einer kathodischen Elektrotauchlackierung versehen. Diese wird mit den üblichen Verfahren wie Elektrotauchlackierung, Tauchen, Rakeln, Spritzen, Walzen oder ähnlichem, appliziert. Bevorzugt wird die Grundierung zumindest teilweise oder vollständig, insbesondere vollständig, ausgehärtet, bevor Füller, Basis- und Klarlack appliziert werden. Die Aushärtung der Grundierung erfolgt üblicherweise durch Erhitzen auf eine Temperatur zwischen 80 und 170 °C für eine Zeit von 3 bis 30 min

Die erfindungsgemäße Mehrschichtlackierung wird vorzugsweise auf Substraten aus Metall und/oder Kunststoff, bevorzugt aus Metall, hergestellt. Diese Substrate können selbstverständlich konversionsbeschichtet sein oder auf andere Weise vorbehandelt sein. So sind metallische Substrate in der Regel konversionsbeschichtet, insbesondere phosphatiert.

Auf die Grundierung werden dann insbesondere mindestens ein Füller, mindestens ein Basislack und mindestens ein Klarlack aufgetragen, bevorzugt jeweils genau einer der genannten Beschichtungsmittel.

Füller, Basislack und Klarlack werden mittels üblicher Verfahren zur Applikation von flüssigen Beschichtungsmitteln, wie beispielsweise Tauchen, Rakeln, Spritzen, Walzen oder ähnlichem, insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Besonders vorteilhaft ist es, einen Basislack in einem ersten Auftrag durch ESTA und einem zweiten Auftrag pneumatisch zu applizieren.

In einer ersten bevorzugten Ausführungsform wird der Füller zumindest teilweise oder vollständig, bevorzugt vollständig, ausgehärtet, bevor Basis- und Klarlack appliziert werden. Die Aushärtung des Füllers erfolgt üblicherweise durch Erhitzen auf eine Temperatur zwischen 80 und 190°C für eine Zeit von 2 bis 30 min. Der dann applizierte Basislack wird vorzugsweise kurz abgelüftet oder kurz getrocknet, im Allgemeinen bei einer Temperatur zwischen 15 und kleiner 100°C für eine Zeit von 1 bis 15 min. Danach wird der Klarlack appliziert.

Der applizierte Basislack und der applizierte Klarlack werden dann bevorzugt gemeinsam thermisch gehärtet. Sofern beispielsweise der Klarlack auch noch mit aktinischer Strahlung härtbar ist, erfolgt noch eine Nachhärtung durch Bestrahlung mit aktinischer Strahlung.

Die Aushärtung kann nach einer gewissen Ruhezeit erfolgen. Sie kann eine Dauer von 30 sec bis 2 h, vorzugsweise 1 min bis 1 h und insbesondere 1 bis 45 min haben. Die Ruhezeit dient beispielsweise dem Verlauf und zur Entgasung der Lackschichten oder zum Verdunsten von flüchtigen Bestandteilen. Die Ruhezeit kann durch die Anwendung erhöhter Temperaturen bis 90°C und/oder durch eine reduzierte Luftfeuchte kleiner 10 g Wasser/kg Luft unterstützt und/oder verkürzt werden, sofern hierbei keine Schädigungen oder Veränderungen der Lackschichten eintreten, etwa eine vorzeitige Vernetzung.

Die gemeinsame Aushärtung erfolgt üblicherweise bei einer Temperatur zwischen 90 und 160°C, bevorzugt 100 bis 150°C, während einer Zeit von 5 bis 90 min.

Die angegebenen Temperaturen verstehen sich jeweils als Objekttemperaturen des beschichteten Substrats.

Für die Trocknung beziehungsweise Konditionierung der nassen Basislackierung sowie der nassen Klarlackierung werden bevorzugt thermische und/oder Konvektionsverfahren verwendet, wobei übliche und bekannte Vorrichtungen wie Durchlauföfen, NIR- und IR-Heizstrahler, Gebläse und Blastunnel eingesetzt werden. Diese Vorrichtungen können auch miteinander kombiniert werden.

In einer weiteren bevorzugten Ausführungsform wird auch der Füller nicht separat gehärtet, sondern nach wie oben für den Basislack beschriebenem Ablüften oder kurzem Trocknen mit einem Basislack überlackiert. Dann folgen wiederum wie oben beschrieben die Applikation des Klarlacks und, gegebenenfalls nach wie oben beschriebener Ruhezeit, die abschließende Härtung aller drei Schichten zusammen. Bei dieser als "Nass-in-Nass-in-Nass-Applikation (auch "3-Wet", "3-Coats-1-Bake" oder "3C1B") bekannten Systematik wird also durch spezielle Anpassung und Abstimmung der Beschichtungsmittel aufeinander auf einen Härtungsschritt verzichtet und so ein insgesamt ökonomischerer Lackierprozess realisiert. In dieser Systematik wird der nun nicht mehr separat gehärtete Füller von der Fachwelt der besseren Übersichtlichkeit halber oft auch als Funktionsschicht bezeichnet. Auch in diesem Prozess kann das erfindungsgemäße Beschichtungsmittel hervorragend als Basislack und gegebenenfalls zusätzlich als Füller beziehungsweise als die Funktionsschicht ausmachendes Beschichtungsmittel dienen.

Bei den erfindungsgemäßen Mehrschichtlackierungen weist die Basislackierung im Allgemeinen eine Trockenfilmschichtdicke von bevorzugt 3 bis 40 Mikrometern, insbesondere bevorzugt von 5 bis 30 Mikrometern, und ganz bevorzugt 7 bis 25 Mikrometern auf. Die Klarlackierung kann im Allgemeinen eine Trockenfilmschichtdicke von vorzugsweise 10 bis 60 Mikrometern, darunter bevorzugt bis zu 55 Mikrometern, insbesondere bis zu 45 Mikrometern, ganz besonders bevorzugt bis zu 40 Mikrometern aufweisen. Besonders bevorzugt sind Bereiche von 25 bis 55 Mikrometern, insbesondere von 30 bis 45 Mikrometern und ganz besonders vorteilhaft von 35 bis 40 Mikrometern.

Bei den eingesetzten Grundierungen, Füllern und Klarlacken kann es sich um die dem Fachmann in diesem Zusammenhang bekannten, in der Regel im Handel erhältlichen Beschichtungsmittel handeln. Bei den Klarlacken handelt es sich vorzugsweise um lösemittelbasierte Klarlacke. Bevorzugte Klarlacke werden zudem noch weiter unten genannt.

Der Einsatz des erfindungsgemäßen Beschichtungsmittels eignet sich ebenfalls hervorragend zur Reparatur von Mehrschichtlackierungen, beispielsweise erfindungsgemäßen mehrschichtigen Erstlackierungen (OEM) von Automobilen. Es handelt sich also insbesondere um eine Variante des erfindungsgemäßen Verfahrens zur Herstellung von Mehrschichtlackierungen, bei dem als Substrat aus Stufe (1) des Verfahrens eine Mehrschichtlackierung, welche Fehlstellen besitzt, verwendet wird. Als Fehlstellen beziehungsweise Filmfehler werden im Allgemeinen Störungen an und in der Beschichtung, die meist nach ihrer Form oder ihrem Aussehen benannt werden, bezeichnet.

Treten solche Fehlstellen im Rahmen der Automobillackierung direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse (Doppellackierung), sondern nur der sogenannte "Spot" repariert. Dieser Prozess wird "Spot Repair" genannt. Neben dieser Form der Reparatur ist aber selbstverständlich auch die Reparatur von Mehrschichtlackierungen, welche im Rahmen des bestimmungsgemäßen Gebrauchs eines Automobils beschädigt wurden, umfasst.

Fehlstellen von beziehungsweise an Mehrschichtlackierung lassen sich mit Hilfe des vorstehend beschriebenen Verfahrens ausbessern. Hierzu kann die auszubessernde Oberfläche der Mehrschichtlackierung zunächst angeschliffen werden. Anschließend erfolgt die Applikation des erfindungsgemäßen Beschichtungsmittels als Basislack auf die Fehlstelle in der Originallackierung durch pneumatische Zerstäubung. Nach der Applikation des Basislacks kann dieser nach bekannten Methoden abgelüftet beziehungsweise getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Anschließend wird in der Regel ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet, insbesondere auf die schon oben beschriebene Weise.

In der Folge wird das erfindungsgemäße Beschichtungsmittel beschrieben.

Das erfindungsgemäße Beschichtungsmittel umfasst mindestens ein spezielles Copolymer (A). Dieses Copolymer (A) ist erhältlich beziehungsweise wird erhalten durch Copolymerisation einer Mischung von olefinisch ungesättigten Monomeren (a) in mindestens einem organischen Lösemittel.

Polymere beziehungsweise Copolymere stellen bekanntermaßen immer Mischungen von verschieden großen Molekülen dar, wobei sich diese Moleküle durch eine Abfolge von gleichen oder verschiedenen organischen Monomereinheiten (als reagierte Form von organischen Monomeren) auszeichnen. Während einem bestimmten organischen Monomer eine diskrete Molekülmasse zuzuordnen ist, ist ein Polymer also immer eine Mischung von Molekülen, die sich in ihrer Molekülmasse unterscheiden. Natürlich kann damit ein Polymer, betrachtet als Mischung verschiedener Moleküle, immer auch gewisse Restanteile von nicht umgesetzten Monomeren enthalten, auch wenn dies aus noch weiter unten genannten Gründen in der Regel nachteilig ist und daher versucht wird, solche Restanteile zu minimieren.

Copolymere, die durch Copolymerisation von olefinisch ungesättigten Monomeren in organischen Lösemitteln erhalten werden, sind grundsätzlich bekannt. Als Beispiele von bei einer solchen Copolymerisation grundsätzlich einsetzbaren olefinisch ungesättigten Monomeren seien die an sich bekannten einfach olefinisch ungesättigten Monomere wie insbesondere (meth)acrylat-basierte einfach olefinisch ungesättigte Monomere, Allylgruppen-haltige einfach olefinisch ungesättigte Monomere und weitere Vinylgruppenhaltige einfach olefinisch ungesättigte Monomere wie beispielsweise vinylaromatische Monomere genannt. Der Begriff (meth)acryl beziehungsweise (Meth)acryat umfasst im Rahmen der vorliegenden Erfindung sowohl Methacrylate als auch Acrylate. Die Copolymerisation solcher Monomere in typischen organischen Lösemitteln erfolgt regelmäßig unter Einsatz ebenfalls bekannter und weiter unten im Detail beschriebener Initiatoren unter den auf dem Gebiet der Polymerchemie üblichen und bekannten Bedingungen.

Die Mischung von olefinisch ungesättigten Monomeren (a) umfasst mindestens ein spezielles Monomer (a1) der folgenden Formel (I). 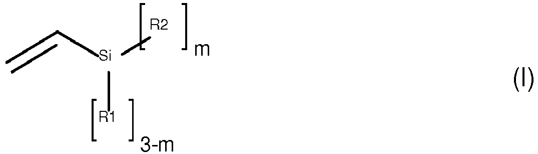 mit
R₁ = C₁- bis C₄-Alkoxy, bevorzugt C₁- bis C₂-Alkoxy, insbesondere bevorzugt Methoxy (= C₁-Alkoxy), R₂ = C₁- bis C₄-Alkyl, bevorzugt C₁- bis C₂-Alkyl, insbesondere bevorzugt Methyl (= C₁-Alkyl) und m = 0 bis 2, bevorzugt 0 oder 1, insbesondere bevorzugt 0.
Ein besonders bevorzugtes Monomer (a1) ist demnach beispielsweise Vinyltrimethoxysilan (R₁ = Methoxy, m = 0).

Die Monomere (a1) umfassen also mindestens eine nach dem Fachmann grundsätzlich bekannten Mechanismen hydrolisierbare Si-O-Alkyl-Bindung (Si-R₁-Bindung). Auf diese Weise ist es beispielsweise möglich, dass ein Copolymer (A) durch entsprechende Hydrolyse- und Kondensationsreaktionen in bei der Härtung stattfindende Vernetzungsprozesse eines Beschichtungsmittels, welches ein solches Copolymer enthält, involviert ist. Somit kann es zu vorteilhaften Eigenschaften wie insbesondere der Zwischenschichthaftung, Steinschlagfestigkeit und der Härte beitragen.

Der Anteil des mindestens einen Monomers (a1), bezogen auf die Gesamtmenge der zur Copolymerisation eingesetzten Monomere (a), beträgt von 10 bis 60 mol-%, bevorzugt von 11 bis 50 mol-%, insbesondere bevorzugt von 12 bis 40 mol-% und nochmals bevorzugt 13 bis 35 mol-%.

Bei Einsatz geringerer Mengen des mindestens einen Monomers (a1) sind offensichtlich nur noch sehr geringe Mengen an wie oben beschriebenen Silangruppen enthalten, sodass eine nur geringfügige Einbindung des Copolymers (A) in die Vernetzungsprozesse besteht und somit kein ausreichender Einfluss auf die schon beschriebenen anwendungstechnischen Eigenschaften zu erwarten ist. Werden höhere Mengen des Monomers (a1) eingesetzt, kann es zu Unverträglichkeiten mit anderen Komponenten innerhalb des Beschichtungsmittels kommen, wodurch letztlich insbesondere negative Einflüsse auf die ästhetischen Eigenschaften von aus den Beschichtungsmitteln hergestellten Beschichtungen entstehen können. Beispielhaft seien Stippen und/oder Trübungen genannt.

Die Mischung von olefinisch ungesättigten Monomeren (a) umfasst zudem mindestens ein weiteres Monomer (a2).

Die Auswahl des mindestens einen weiteren olefinisch ungesättigten Monomers (a2) richtet sich nach den jeweiligen individuellen Anforderungen des Einzelfalls. Beschränkungen in der Auswahl des mindestens einen weiteren olefinisch ungesättigten Monomers ergeben sich letztlich dadurch, dass das Copolymer (A) eine wie weiter unten im Detail beschriebene Glasübergangstemperatur aufweisen muss. Die Auswahl der Monomere (a2) kann in diesem Sinne bekanntermaßen durch einige wenige zielgerichtete Versuche und/oder durch die Berücksichtigung von wie nachfolgend erläuterten Literaturwerten erfolgen.

In der Literatur vielfach beschrieben sind Glasübergangstemperaturen von Homopolymeren verschiedenster Monomere. Zwar sind die Glasübergangstemperaturen solcher Homopolymere neben der Wahl des Monomers auch geringfügig abhängig von weiteren Kenngrößen wie beispielsweise dem Molekulargewicht des Homopolymers. Trotzdem bewegen sich die Glasübergangstemperaturen von verschiedenen Homopolymeren ein und des selben Monomers in einem vergleichsweise engen Bereich, sodass eine einfache und zielgerichtete Ableitung des Einflusses des Zusatzes eines speziellen Monomers zu einer zu polymerisierenden Mischung auf die Glasübergangstemperatur des resultierenden Copolymers erfolgen kann (vergleiche hierzu auch die bekannte Fox-Gleichung, die die Art und Menge der eingesetzten Monomere über die Glasübergangstemperatur der Homopolymere dieser Monomere mit der Glasübergangstemperatur des Copolymers korreliert).

Beispielhaft sei auf Homopolymere von Methylmethacrylat und n-Butylacrylat verwiesen. Während erstere unabhängig von anderen Kenngrößen oder der gewählten Messmethode eine Glasübergangstemperatur von jedenfalls mehr als 100°C aufweisen, werden für letztere Glasübergangstemperaturen von etwa -55°C beschrieben. Hat der Fachmann ein Copolymer aus einer Mischung olefinisch ungesättigter Monomere unter Einsatz mindestens eines Monomers der Formel (I) hergestellt und besitzt dieses Copolymer eine Glasübergangstemperatur von 10°C (die im Rahmen der vorliegenden Erfindung anzuwendende Messmethode ist weiter unten beschrieben), so ist ihm unmittelbar klar, wie er hiervon ausgehend die Glasübergangstemperatur erhöhen oder erniedrigen kann. Eine Erhöhung des Anteils von Methylmethacrylat in der Mischung olefinisch ungesättigter Monomere würde jedenfalls zu einem Copolymer führen, das eine höhere Glasübergangstemperatur besitzt. Die Erhöhung des Anteils von n-Butylacrylat würde entsprechend in einer Senkung der Glasübergangstemperatur resultieren. Die exakte Glasübergangstemperatur eines dann mit einer abgeänderten Monomermischung hergestellten Copolymers kann dann wieder über die weiter unten beschriebene, im Rahmen der vorliegenden Erfindung anzuwendende Messmethode bestimmt werden.

Die Monomere (a2) sind bevorzugt einfach olefinisch ungesättigt.

Eine bevorzugte Gruppe von Monomeren (a2) sind an sich bekannte (meth)acryl-basierte, einfach olefinisch ungesättigten Monomere (a21). Beispielhaft seien (Meth)acrylsäure und Ester oder Amide der (Meth)acrylsäure genannt.

Insbesondere bevorzugt sind Ester der (Meth)acrylsäure (a21), das heißt Monomere der Formel H₂C=CH₂-(C=O)-O-R₃ beziehungsweise H₂C=CH(CH₃)-(C=O)-O-R₃, worin R₃ ein gesättigt-aliphatischer, aromatischer oder gemischt gesättigt-aliphatisch-aromatischer Rest ist. Bevorzugt ist R₃ gesättigt-aliphatisch. Als aliphatisch werden im Rahmen der vorliegenden Erfindung alle organischen Reste bezeichnet, die nicht aromatisch sind.

Der gesättigt-aliphatische Rest kann ein reiner Kohlenwasserstoffrest sein oder er kann verbrückenden Heteroatome (beispielsweise Sauerstoff aus Ether- oder Estergruppen) enthalten und/oder mit funktionellen Gruppen enthaltend Heteroatome (beispielsweise Alkoholgruppen) substituiert sein. Bevorzugt ist der gesättigt-aliphatische Rest R₃ ein reiner Kohlenwasserstoffrest (Alkylrest), enthält also keine verbrückenden Heteroatome (beispielsweise Sauerstoff aus Ethergruppen) und ist nicht mit funktionellen Gruppen (beispielsweise Alkoholgruppen) substituiert.

Für den Fall, dass der Rest R₃ ein Alkylrest ist, kann es sich um einen linearen, verzweigten oder cyclischen Alkylrest handeln. Natürlich kann ein solcher Alkylrest auch lineare und cyclische beziehungsweise verzweigte und cyclische Strukturanteile aufweisen. Bevorzugt hat der Alkylrest 1 bis 20, besonders bevorzugt 1 bis 10 Kohlenstoffatome.

Als Beispiele dieser besonders bevorzugten Ester der (Meth)acrylsäure mit einem Alkylrest R₃ seien Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat genannt. Darunter bevorzugte Verbindungen sind Methylmethacrylat, n-Butylacrylat und auch Ethylhexylacrylat.

Eine weitere bevorzugte Gruppe von Monomeren (a2), die auch in Kombination mit den oben beschriebenen (meth)acrylat-basierten Monomeren (a21) eingesetzt werden können, sind von den (meth)acrylat-basierten Monomeren (a21) verschiedene, vinylische und einfach ungesättigte Monomere (a22) der Formel H₂C=CH₂-R₄. Der Rest R₄ enthält dann selbstverständlich keine olefinisch ungesättigten Gruppen. Er kann ansonsten an sich beliebig gewählt sein (wobei allerdings keine -(C=O)-O- Funktion in alpha-Stellung zur Vinylfunktion vorhanden sein kann, da es sich sonst um ein Monomer (a21) handeln würde).

Der Rest R₄ kann demnach gesättigt-aliphatisch, aromatisch oder gemischt gesättigt-aliphatisch-aromatisch sein. Bevorzugt ist er gesättigt-aliphatisch. Möglich sind dabei Reste R₄, die verbrückenden Heteroatome und/oder funktionelle Gruppen enthaltend Heteroatome umfassen. Beispielhaft seien Ether, Amide, Nitrile, Heterocyclen und Ester der Form -O-(C=O)-R₅ (wobei R₅ dann analog dem oben beschriebenen Rest R₃ der (meth)acrylat-basierten Monomere wieder ein gesättigt-aliphatischer, aromatischer oder gemischt gesättigt-aliphatisch-aromatischer Rest sein kann) genannt. Möglich ist natürlich auch, dass ein aliphatischer Rest R₄ ein reiner Kohlenwasserstoffrest ist, das heißt ein Alkylrest, welcher linear, verzweigt oder cyclisch ist. Natürlich kann ein solcher Alkylrest auch lineare und cyclische beziehungsweise verzweigte und cyclische Strukturanteile aufweisen.
Bevorzugte Monomeren (a22) sind solche der Formel H₂C=CH₂-R₄ mit R₄ = -O-(C=O)-R₅, wobei R₅ analog der oben beschriebenen bevorzugten Reste R₃ ein Alkylrest mit 1 bis 20, besonders bevorzugt 1 bis 10 Kohlenstoffatomen ist. Beispielhaft sei Vinylacetat (R₅ = Methyl) genannt. Ebenfalls genannt seien die unter dem Handelsnamen VeoVa erhältlichen Monomere, in denen der Rest R₅ neun Kohlenstoffatome aufweist und in alpha-Stellung zur Estergruppe ein quartäres Kohlenstoffatom besitzt. Diese demzufolge verzweigten Monomere sind genauso wie Vinylacetat allein aufgrund ihrer guten Verfügbarkeit bevorzugte Monomere (a22).

Im Rahmen der vorliegenden Erfindung hat sich gezeigt, dass der hauptsächliche Einsatz von Monomeren (a2), die keine funktionellen Gruppen enthalten, welche mit den hydrolisierbaren Si-O-Alkyl-Bindungen (Si-R₁-Bindungen) der Monomere (a1) Kondensationsreaktionen eingehen können, von Vorteil ist. Solche funktionellen Gruppen sind dem Fachmann bekannt. Explizit sind hierunter insbesondere Hydroxylgruppen, Carbonsäuregruppen, Aminogruppen und Säureanhydridgruppen zu verstehen. Im Stand der Technik bekannt sind beispielsweise Copolymere, bei deren Herstellung neben Vinylsilangruppen-haltigen Monomeren signifikante Mengen an olefinisch ungesättigten Monomeren enthaltend Hydroxylgruppen oder Carbonsäuregruppen zum Einsatz kommen. Im Rahmen der vorliegenden Erfindung wird bevorzugt aber gerade auf einen solchen Einsatz verzichtet. Auf diese Weise werden Kondensationsprozesse zwischen den Silangruppen (beziehungsweise den hydrolisierbaren Si-R₁-Bindungen) und den genannten funktionellen Gruppen, beispielsweise Hydroxylgruppen, minimiert. Dies gilt sowohl für die Herstellung als auch für die dann folgende Lagerung. Durch die hauptsächliche Vermeidung solcher Monomere also wird insbesondere die Lagerstabilität von Beschichtungsmitteln, welche entsprechende Copolymere enthalten, verbessert.

Demzufolge umfassen die eingesetzten olefinisch ungesättigten Monomere (a2), bezogen auf die Gesamtmenge dieser Monomere (a2), bevorzugt mindestens 70 mol-%, insbesondere bevorzugt mindestens 80 mol-%, ganz besonders bevorzugt mindestens 95 mol-% an Monomeren, welche frei sind von funktionellen Gruppen ausgewählt aus der Gruppe bestehend aus Hydroxylgruppen, Carbonsäuregruppen, Aminogruppen und Säureanhydridgruppen. In einer ganz besonders bevorzugten Ausführungsform werden ausschließlich Monomere (a2) eingesetzt, die frei von funktionellen Gruppen ausgewählt aus der Gruppe bestehend aus Hydroxylgruppen, Carbonsäuregruppen, Aminogruppen und Säureanhydridgruppen sind.

Im Rahmen der vorliegenden Erfindung hat sich zudem gezeigt, dass der hauptsächliche Einsatz von Monomeren (a2), die keine aromatischen Gruppen enthalten, von Vorteil ist. Insbesondere wird hierdurch erreicht, dass bei der Herstellung von Copolymeren (A) ein weitestgehend vollständiger Umsatz der eingesetzten Monomere erzielt wird, das heißt keine oder nur minimale Mengen von Restmonomeren zurückbleiben. Solche Restmonomere können grundsätzlich, wenn überhaupt, nur unter aufwendigen Bedingungen entfernt werden. Werden sie nicht entfernt, können in den hergestellten Beschichtungen schwer kontrollierbare Migrationsprozesse und Unverträglichkeiten resultieren. Auch die Gesundheitsgefährdung durch beispielsweise bei der Lagerung oder Härtung austretende Monomere ist sehr nachteilig.

Demzufolge umfassen die eingesetzten olefinisch ungesättigten Monomere (a2), bezogen auf die Gesamtmenge dieser Monomere (a2), bevorzugt mindestens 70 mol-%, insbesondere bevorzugt mindestens 80 mol-%, ganz besonders bevorzugt mindestens 95 mol-% an aliphatischen Monomeren. In einer ganz besonders bevorzugten Ausführungsform werden ausschließlich aliphatische Monomere (a2) eingesetzt.

Aus oben Gesagten folgt, dass im Rahmen der vorliegenden Erfindung die Monomere (a2) bevorzugt mindestens 70 mol-%, insbesondere bevorzugt mindestens 80 mol-%, ganz besonders bevorzugt mindestens 90 mol-% und nochmals bevorzugt mindestens 95 mol-% an Monomeren umfassen, die ausgewählt sind aus der Gruppe bestehend aus Monomeren der Formel H₂C=CH₂-(C=O)-O-Rₓ, H₂C=CH(CH₃)-(C=O)-O-Rₓ sowie H₂C=CH₂-O-(C=O)-Rₓ, wobei Rₓ - analog der oben beschriebenen bevorzugten Reste R₃ und R₅ - ein Alkylrest mit 1 bis 20, besonders bevorzugt 1 bis 10 Kohlenstoffatomen ist. In einer ganz besonders bevorzugten Ausführungsform werden ausschließlich solche Monomere (a2) eingesetzt.
Nochmals bevorzugter umfassen die Monomere (a2) bevorzugt mindestens 70 mol-%, insbesondere bevorzugt mindestens 80 mol-%, ganz besonders bevorzugt mindestens 95 mol-% an Monomeren, die ausgewählt sind aus der Gruppe bestehend aus Monomeren der Formel H₂C=CH₂-(C=O)-O-Rₓ und H₂C=CH(CH₃)-(C=O)-O-Rₓ wobei Rₓ - analog dem oben beschriebenen bevorzugten Rest R₃ - ein Alkylrest mit 1 bis 20, besonders bevorzugt 1 bis 10 Kohlenstoffatomen ist. In einer ganz besonders bevorzugten Ausführungsform werden ausschließlich solche Monomere (a2) eingesetzt.

Eine ganz besonders bevorzugte Zusammensetzung von Monomeren (a2) besteht beispielsweise aus 20 bis 80 mol-% Methylmethacrylat und 20 bis 80 mol-% n-Butylacrylat.

Der Anteil des mindestens einen Monomers (a2), bezogen auf die Gesamtmenge der zur Copolymerisation eingesetzten Monomere (a), beträgt von 40 bis 90 mol-%, bevorzugt von 50 bis 89 mol-%, insbesondere bevorzugt von 60 bis 88 mol-% und nochmals bevorzugt 65 bis 87 mol-%.

Die Copolymere (A) besitzen eine Glasübergangstemperatur T_{g} von mindestens -30°C, bevorzugt -25 bis 50°C und insbesondere bevorzugt von -15 bis 30°C. Die Glasübergangstemperatur kann wie oben beschrieben insbesondere durch gezielt mögliche Auswahl der zu polymerisierenden Monomere und deren Anteilen eingestellt und damit im Zielpolymer realisiert werden. Eine zu niedrige Glasübergangstemperatur des Copolymers wäre den anwendungstechnischen Eigenschaften von Beschichtungen, die mittels des erfindungsgemäßen Beschichtungsmittels hergestellt werden, abträglich. Insbesondere wäre es möglich, dass keine ausreichende Härte der Beschichtung mehr erzielt wird.

Die Glasübergangstemperatur T_{g} wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50°C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

Wird im Rahmen der vorliegenden Erfindung auf eine Norm wie eine DIN-Norm verwiesen, so ist die zum Zeitrang der Anmeldung gültige Fassung der Norm oder, wenn zum Zeitrang der Anmeldung keine gültige Fassung mehr besteht, die zuletzt gültige Fassung der Norm gemeint.

Das zahlenmittlere Molekulargewicht Mₙ der Copolymere (A) liegt typischerweise im Bereich von 1000 bis 30000 g/mol, bevorzugt 1100 bis 15000 g/mol, insbesondere bevorzugt 1200 bis 5000 g/mol. Das gewichtsmittlere Molekulargewicht M_{w} der Copolymere (A) liegt hingegen typischerweise im Bereich von 2000 bis 50000 g/mol, bevorzugt 2500 bis 25000 g/mol, insbesondere bevorzugt 3000 bis 15000 g/mol.

Die mittleren Molekulargewichte werden im Rahmen der vorliegenden Erfindung mittels Gelpermeationschromatographie bei 40°C mit einer Hochdruckflüssigkeitschromatographie-Pumpe und einem Brechungsindexdetektor bestimmt. Als Elutionsmittel wurde Tetrahydrofuran mit einer Elutionsgeschwindigkeit von 1 mL/min verwendet, das Säulenmaterial ist Styrol-Divinylbenzol-basiert. Die Kalibrierung wird mittels Polystyrol-Standards durchgeführt.

Die Herstellung der Copolymere (A) erfolgt in organischen Lösemitteln und kann unter grundsätzlich bekannten Copolymerisationsbedingungen erfolgen, das heißt insbesondere bei Temperaturen von beispielsweise 50 bis 200°C unter Normaldruck oder Überdruck in typischen Apparaturen wie Rührkesseln, Rohrreaktoren, Schlaufenreaktoren oder Taylorreaktoren und unter Einsatz typischer radikalischer Initiatoren.

Beispiele geeigneter organischer Lösemittel sind insbesondere solche, die chemisch inert gegenüber den Monomeren (a) sind und auch unter typischen Polymerisationsbedingungen nicht mit diesem Monomeren reagieren. Der Fachmann weiß entsprechende Lösemittel auszuwählen. Beispiele für solche Lösemittel sind aliphatische und/oder aromatische Kohlenwasserstoffe sowie typische kommerziell erhältliche Lösemittelgemische wie Toluol, Xylol, Solventnaphtha, Solvesso 100, Hydrosol® (Fa. ARAL), Shellsol®, Ketone, wie Aceton, Methylethylketon oder Methylamylketon, Ester, wie Ethylacetat, Butylacetat, Butylglycolacetat, Pentylacetat oder Ethylethoxypropionat, Ether oder Mischungen aus den vorgenannten Lösemitteln. Bevorzugt werden nur geringfügige Mengen von (weniger 5 Gew.-%, bezogen auf die Gesamtmenge an Lösemitteln), insbesondere überhaupt keine organischen protischen Lösemittel eingesetzt. Hierdurch werden typische Nebenreaktionen der Lösemittel mit insbesondere den hydrolisierbaren Si-R₁-Funktionen der Monomere (a1) unterbunden.

Beispiele geeigneter radikalischer Initiatoren sind Dialkylperoxide, wie Di-tert.-Butylperoxid oder Dicumylperoxid, Hydroperoxide, wie Cumolhydroperoxid oder tert.-Butylhydroperoxid, Perester, wie tert.-Butylperbenzoat, tert.-Butylperpivalat, tert.-Butylper-3, 5, 5-trimethyl- hexanoat oder tert.-Butylper-2-ethylhexanoat, Peroxodicarbonate, Kalium-, Natrium- oder Ammoniumperoxodisulfat, Azoinitiatoren, beispielsweise Azodinitrile wie Azobisisobutyronitril, C-C-spaltende Initiatoren wie Benzpinakolsilylether, oder eine Kombination eines nicht oxidierenden Initiators mit Wasserstoffperoxid. Es können auch Kombinationen der vorstehend beschriebenen Initiatoren eingesetzt werden. Die eingesetzte Menge der Initiatoren liegt bevorzugt von 3 bis 8 mol-%, bezogen auf die molare Menge der eingesetzten Monomere (a).

Bei der Copolymerisation wird bevorzugt unter Ausschluss von Sauerstoff gearbeitet (Inertgasatmosphäre), vorzugsweise im Stickstoffstrom. Die Copolymerisation erfolgt bevorzugt bei einer Temperatur von 80 bis 200°C, insbesondere bevorzugt 120 bis 160°C. Insbesondere bei diesen hohen Temperaturen ist es möglich, dass sich die eingesetzten Monomere, insbesondere die Monomere (a1), bei Normaldruck verflüchtigen beziehungsweise die Temperatur bei Normaldruck deren Siedepunkt überschreitet. Daher ist es im Rahmen der vorliegenden Erfindung bevorzugt, dass die Copolymerisation bei Überdruck, insbesondere einem Druck von 2,0 bis 5,0 bar (200.000 bis 500.000 Pascal), bevorzugt 3,0 bis 4,0 bar (300.000 bis 400.000 Pascal), durchgeführt wird. Bevorzugt ist also, dass die Copolymerisation bei einer Temperatur von 80 bis 200°C und einem Druck von 2,0 bis 5,0 bar (200.000 bis 500.000 Pascal) durchgeführt wird, insbesondere bevorzugt bei einer Temperatur von 120 bis 160°C und einem Druck von 3,0 bis 4,0 bar (300.000 bis 400.000 Pascal).

Bevorzugt wird bei der Herstellung wie folgt vorgegangen. Es wird ein organisches Lösemittel in Inertgasatmosphäre vorgelegt und auf die gewünschte Copolymerisationstemperatur erhitzt. Dann wird tropfenweise mit dem Initiatorzulauf begonnen, bevor nach Erreichen einer Mindestmenge an Initiator (typischerweise mindestens 3 mol % des insgesamt eingesetzten Initiators) der tropfenweise Zulauf der vorgemischten Monomere (a) beginnt. Nach vollständiger Zugabe der Monomere (a) kann eine nochmalige Zugabe von Initiator erfolgen, um eine möglichst vollständige Umsetzung der Monomere (a) zu gewährleisten. Sofern im Rahmen der vorliegenden Erfindung die eingesetzte Menge Initiator oder ein Anteil hiervon spezifiziert ist, bezieht sich dies immer auf den zugegebenen Initiator insgesamt, das heißt beispielsweise den vor, während und nach vollständiger Zugabe der Monomere zugesetzten Initiator.

Von Vorteil ist also, dass die zur Polymerisation eingesetzten Monomere (a1) und (a2) vollständig vorgemischt bei der Polymerisation eingesetzt werden, das heißt also vollständig vorgemischt bei der gewünschten Copolymerisationstemperatur mit dem Initiator in Kontakt gebracht werden. In dieser Ausführungsform werden also insbesondere keine Monomere vorgelegt und dann mit den restlichen Monomeren und dem Initiator vermischt. Auf diese Weise wird eine systematische Abweichung zwischen den Verhältnissen der grundsätzlich eingesetzten Monomere und den Verhältnissen der Monomere während der Copolymerisation vermieden.

Der Gehalt der Copolymere (A) am erfindungsgemäßen Beschichtungsmittel beträgt 0,02 bis 0,75 Gew.-%, bevorzugt 0,03 bis 0,50 Gew.-%, nochmals bevorzugt 0,04 bis 0,45 Gew.-%, vorteilhaft 0,05 bis 0,40 Gew.-% und ganz besonders bevorzugt 0,06 bis 0,35 Gew.-%, jeweils bezogen auf die Gesamtmenge am erfindungsgemäßen Beschichtungsmittel. Die Einhaltung dieses Bereichs ist erfindungswesentlich. Bei niedrigeren Anteilen am Beschichtungsmittel wird kein vorteilhafter Effekt mehr auf die anwendungstechnischen Eigenschaften von Beschichtungen erreicht, insbesondere keine gute Zwischenschichthaftung und Steinschlagfestigkeit erzielt. Überraschenderweise hat sich gezeigt, dass eine höhere Menge des Copolymers wiederum zu schlechteren anwendungstechnischen Eigenschaften führt, insbesondere zu einer nicht mehr ausreichenden Steinschlagfestigkeit und Zwischenschichthaftung im Bereich der Reparaturlackierung.

Im Falle einer möglichen Spezifizierung auf Beschichtungsmittel enthaltend bevorzugte Copolymere (A) in einem bestimmten Anteilsbereich gilt folgendes. Die Copolymere (A), die nicht in die bevorzugte Gruppe fallen, können selbstverständlich weiterhin im Beschichtungsmittel enthalten sein. Der bestimmte Anteilsbereich gilt dann nur für die bevorzugte Gruppe von Copolymeren (A). Bevorzugt ist allerdings, dass für den Gesamtanteil von Copolymeren (A) bestehend aus Copolymeren aus der bevorzugten Gruppe und Copolymeren (A), die nicht in die bevorzugte Gruppe fallen, ebenfalls der bestimmte Anteilsbereich gilt.

Würde also eine Beschränkung auf einen Anteilsbereich von 0,02 bis 0,75 Gew.-% einer bevorzugten Gruppe von Copolymeren (A) durchgeführt werden, so gilt dieser Anteilsbereich augenscheinlich zunächst nur für die bevorzugte Gruppe an Copolymeren. Bevorzugt wäre dann aber, dass insgesamt von allen ursprünglich umfassten Copolymeren (A) bestehend aus Copolymeren (A) aus der bevorzugten Gruppe und Copolymeren (A), die nicht in die bevorzugte Gruppe fallen, ebenfalls von 0,02 bis 0,75 Gew.-% enthalten sind. Werden also 0,4 Gew.-% von Copolymeren (A) der bevorzugten Gruppe eingesetzt, so können höchstens 0,35 Gew.-% der Copolymere (A) der nicht bevorzugten Gruppe eingesetzt werden.

Im Falle einer wie beschriebenen Spezifizierung ist es bevorzugt, dass die jeweils bevorzugten Copolymere (A) mindestens 50 mol-%, bevorzugt mindestens 80 mol-%, insbesondere 100 mol-% der insgesamt enthaltenen Copolymere (A) ausmachen.

Das genannte Prinzip gilt im Rahmen der vorliegenden Erfindung für alle genannten Komponenten des Beschichtungsmittels und deren Anteilsbereiche, beispielsweise für die Pigmente.

Das erfindungsgemäße Beschichtungsmittel ist pigmentiert und enthält demnach mindestens ein Pigment. Pigmente sind bekanntermaßen pulver- und/oder plättchenförmige Farbmittel, die gängig in Beschichtungsmitteln eingesetzt werden.

Vorzugsweise wird das Pigment aus der Gruppe bestehend aus organischen und anorganischen, bevorzugt anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Besonders bevorzugt enthält das erfindungsgemäße pigmentierte Beschichtungsmittel mindestens ein effektgebendes Pigment, bevorzugt mindestens ein Metallplättchenpigment. Neben dem oder den effektgebenden Pigmenten kann das erfindungsgemäße pigmentierte Beschichtungsmittel auch noch mindestens ein oder mehrere weitere Pigmente, beispielsweise farbgebende Pigmente, enthalten.

Beispiele geeigneter Effektpigmente, die auch farbgebend sein können, sind Metallplättchenpigmente, insbesondere Aluminiumplättchenpigmente, wie handelsübliche Edelstahlbronzen, insbesondere handelsübliche Aluminiumbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Seite 176, Stichwort "Effektpigmente" und Seiten 380 und 381, Stichworte "Metalloxid-Glimmer-Pigmente" bis "Metallpigmente" verwiesen.

Insbesondere werden Aluminiumbronzen beziehungsweise Aluminiumplättchenpigmente eingesetzt, beispielsweise in Form von Pasten mit organischen Lösemitteln. Eingesetzt werden dabei sowohl unbehandelte Typen, die beispielsweise unter dem Namen Stapa® Metallux (Firma Eckart) im Handel erhältlich sind, als auch behandelte Typen, insbesondere silanisierte Typen, die beispielsweise in der WO 01/81483 beschrieben sind und beispielsweise unter dem Namen Hydrolan® (Firma Eckart) im Handel erhältlich sind.

Bevorzugt hat das Metallplättchenpigment eine mittlere Teilchengröße von 10 bis 70 und insbesondere von 13 bis 35 Mikrometern (D50-Wert, ISO 13320-1 nach Cilas (Gerät 1064)). Dabei weisen solche Metallplättchenpigment eine Dicke von bevorzugt 200 bis 2000 nm und insbesondere 500 bis 1500 nm, auf (gemessen mittels Rasterelektronenmikroskop). Durch die beiden Analysenmethoden gelingt eine hinreichende Bestimmung der geometrischen Parameter der Teilchen, wobei die Messung der mittleren Teilchengröße eher den Durchmesser der Plättchen widerspiegelt.

Geeignete organische und/oder anorganische farbgebende Pigmente sind die in der Lackindustrie üblicherweise eingesetzten Pigmente. Beispiele für geeignete anorganische farbgebende Pigmente sind Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.
Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Der Gehalt an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in den erfindungsgemäßen pigmentierten Beschichtungsmitteln. Bevorzugt liegt der Anteil an Pigmenten bei 0,5 bis 50 Gew.-%, insbesondere bevorzugt bei 0,5 bis 40 Gew.-%, ganz besonders bevorzugt bei 1 bis 30 Gew.-%, besonders vorteilhaft 1,5 bis 20 Gew.-%, jeweils bezogen auf das Gesamtgewicht des Beschichtungsmittels.

Das erfindungsgemäße Beschichtungsmittel enthält als lösemittelbasiertes Beschichtungsmittel mindestens ein organisches Lösemittel.

Als Lösemittel geeignet sind alle üblicherweise in der Lackindustrie eingesetzten Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Butylglykolacetat, Butanol, Dipropylenglykolmethylether, Glykolsäurebutylester, Xylol, Toluol, Shellso® T, Pine Oel 90/95, Solventnaphtha®, Shellsol® A, Solvesso, Benzin 135/180. Bevorzugt werden nur geringfügige Mengen von (weniger 5 Gew.-%, bezogen auf die Gesamtmenge an Lösemitteln), insbesondere überhaupt keine organischen protischen Lösemittel eingesetzt. Hierdurch werden typische Nebenreaktionen der Lösemittel mit insbesondere den hydrolisierbaren Si-R₁-Funktionen der Polymere (A) unterbunden.

Der Gehalt von organischen Lösemitteln am erfindungsgemäßen Beschichtungsmittel beträgt beispielsweise höchstens 80 Gew.-%. Bevorzugt beträgt der Anteil 45 bis 80 Gew.-%, darunter bevorzugt mindestens 50 Gew.-%, insbesondere mindestens 55 Gew.-%, insbesondere vorteilhaft mindestens 60 Gew.-%, jeweils bezogen auf die Gesamtmenge des erfindungsgemäßen pigmentierten Beschichtungsmittels. Besonders bevorzugte Bereiche sind von 45 bis 80 Gew.-%, insbesondere 50 bis 80 Gew.-%, besonders bevorzugt 55 bis 80 Gew.-% und ganz besonders vorteilhaft 60 bis 80 Gew.-%, jeweils bezogen auf die Gesamtmenge des erfindungsgemäßen pigmentierten Beschichtungsmittels.

Das erfindungsgemäße Beschichtungsmittel ist lösemittelbasiert. Mit lösemittelbasierten Beschichtungsmitteln sind solche gemeint, die als Lösemittel mindestens ein organisches Lösemittel und insbesondere nicht Wasser enthalten. Dies bedeutet, dass bei der Herstellung des Beschichtungsmittels nicht explizit Wasser zugegeben wird, sondern Wasser beispielsweise lediglich als Restanteil oder Verunreinigung von anderen im Beschichtungsmittel vorhandenen Bestandteilen eingeschleppt wird, beispielsweise durch Restanteile Wasser in organischen Lösemitteln. Insbesondere ist mit lösemittelbasiert gemeint, dass das Beschichtungsmittel mindestens ein organisches Lösemittel enthält und dass der Wasseranteil weniger als 2 Gew.-%, bevorzugt weniger als 1 Gew.-%, jeweils bezogen auf das Gesamtgewicht des Beschichtungsmittels, beträgt. Ganz besonders bevorzugt ist das Beschichtungsmittel wasserfrei.

Das erfindungsgemäße Beschichtungsmittel enthält vorzugsweise neben dem mindestens einen Copolymer (A) mindestens ein weiteres, von den Copolymeren (A) verschiedenes Polymer (B) als Bindemittel.

Als weitere Bindemittel (B) sind beispielsweise statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze geeignet.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane.

Bevorzugt enthält das Beschichtungsmittel ein hydroxyfunktionelles Polymer (B) als Bindemittel.

Bevorzugt enthält das erfindungsgemäße pigmentierte Beschichtungsmittel mindestens ein Acrylat-Polymer, Polyurethan-Polymer und/oder einen Polyester als weiteres Bindemittel (B). Ganz besonders bevorzugt ist ein Polyester (B) enthalten.

Vorzugsweise enthalten die Polymere (B) als Bindemittel Thio-, Hydroxyl-, N-Methylolamino-, N-Alkoxymethylamino-, Imino-, Carbamat-, Allophanat und/oder Carboxylgruppen, bevorzugt Hydroxyl- oder Carboxylgruppen. Ganz besonders bevorzugt sind Hydroxylgruppen. Über diese funktionellen Gruppen, insbesondere die Hydroxylgruppen, kann dann beispielsweise eine Vernetzung mit Komponenten, die weitere funktionelle Gruppen wie vorzugsweise Anhydrid-, Carboxyl-, Epoxy-, blockierte Isocyanat-, Urethan-, Siloxan-, Carbonat-, Amino, Hydroxy- und/oder beta-Hydroxyalkylamidgruppen enthalten, stattfinden. Insbesondere ist es möglich, dass ein hydroxyfunktionellen Polymer (B) bei der Härtung über die Hydroxylgruppen mit den im Copolymer (A) vorhandenen hydrolisierbaren Si-R₁-Funktionen vernetzt.

Das erfindungsgemäße Beschichtungsmittel ist also bevorzugt thermisch härtbar, das heißt durch chemische Reaktion der beschriebenen reaktiven funktionellen Gruppen kann eine Vernetzung stattfinden (Bildung eines Beschichtungsfilms), wobei die energetische Aktivierung dieser chemischen Reaktion durch thermische Energie möglich ist. Ganz besonders bevorzugt erfolgt dabei die schon genannte Vernetzung des mindestens einen Copolymers (A) über die hydrolisierbaren Si-R₁-Funktionen mit Hydroxylgruppen des Bindemittels (B), das heißt das erfindungsgemäße Beschichtungsmittel ist dann thermisch härtbar und fremdvernetzend.

Eine Fremdvernetzung liegt also vor, wenn ein Polymer enthaltend bestimmte funktionelle Gruppen mit einem davon verschiedenen, gegebenenfalls ebenfalls polymeren so genannten Vernetzungsmittel reagiert, wobei dann das Vernetzungsmittel reaktive funktionelle Gruppen enthält, die zu den in dem eingesetzten organischen Polymer vorhandenen reaktiven funktionellen Gruppen komplementär sind. So kann in dieser Hinsicht beispielsweise das Copolymer (A) als Vernetzungsmittel bezeichnet werden, dass über die hydrolisierbaren Si-R₁-Funktionen mit dem hydroxyfunktionellen Polymer (B) vernetzt. Beide Komponenten sind natürlich Bindemittelkomponenten, denn sie gehören zum nicht-flüchtigen Anteil des Beschichtungsmittels ohne Pigmente und Füllstoffe. Bekanntermaßen wird aber allein der Übersichtlichkeit halber regelmäßig eine der Komponenten als Vernetzungsmittel bezeichnet.

Selbstverständlich können auch noch weitere, vom Fachmann regelmäßig als Vernetzungsmittel bezeichnete Komponenten enthalten sein. Beispielhaft seien freie und blockierte Polyisocyanate sowie Melaminharze genannt. Diese können dann auch mit den hydroxyfunktionellen Polymeren (B) vernetzen.

Es ist aber ein besonderer Vorteil der vorliegenden Erfindung, dass durch den Einsatz der wie oben erläutert vernetzenden Copolymere (A) weitestgehend oder sogar vollständig auf den Einsatz von typischen Vernetzungsmitteln, insbesondere Melaminharzen, verzichtet werden kann und trotzdem hervorragende anwendungstechnische Eigenschaften, insbesondere eine gute Zwischenschichthaftung resultiert. Dies ist umso überraschender, als grundsätzlich der Einsatz von Formaldehyd-haltigen Melaminharzen in pigmentierten Beschichtungsmitteln, die insbesondere für die Herstellung von Mehrschichtlackierung eingesetzt werden sollen, als sehr relevant, wenn nicht unverzichtbar, gilt. Zwar mag sich auch im Rahmen der vorliegenden Erfindung der zusätzliche Einsatz von Melaminharzen in bestimmten Einzelfällen anbieten, die grundsätzlich mögliche Herabsetzung des Anteils der Melaminharze oder sogar der vollständige Verzicht sind aber ohne weiteres möglich.

Demzufolge ist der Gehalt von Melaminharzen in den erfindungsgemäßen Beschichtungsmitteln vorzugsweise kleiner 5 Gew.-%, bevorzugt kleiner 3 Gew.-%, insbesondere bevorzugt kleiner 1,5 Gew.-%, jeweils bezogen auf das Gesamtgewicht des Beschichtungsmittels. Ganz besonders bevorzugt sind die erfindungsgemäßen Beschichtungsmittel vollständig frei von Melaminharzen.

Nochmals bevorzugter ist, dass der Gehalt von Formaldehyd-basierten Aminoplastharzen allgemein kleiner 5 Gew.-%, bevorzugt kleiner 3 Gew.-%, insbesondere bevorzugt kleiner 1,5 Gew.-%, jeweils bezogen auf das Gesamtgewicht des Beschichtungsmittels ist. Ganz besonders bevorzugt sind die erfindungsgemäßen Beschichtungsmittel vollständig frei von Formaldehyd-basierten Aminoplastharzen. Formaldehyd-basierte Aminoplastharzen sind bekanntermaßen die Gruppe von Harzen, die sich durch Kondensation von Formaldehyd und Verbindungen mit NH-Gruppen wie Harnstoff oder Melamin gewinnen lassen beziehungsweise bei deren Herstellung diese Kondensation stattfindet. Melaminharze sind also eine Untergruppe der Formaldehyd-basierten Aminoplastharze.

Nochmals bevorzugter ist, wenn zusätzlich der Anteil von Isocyanat-haltigen Vernetzern am erfindungsgemäßen Beschichtungsmittel ebenfalls unterhalb der oben genannten Grenzen (5 Gew.-%, 3, Gew.-%, 1,5 Gew.-%) liegt beziehungsweise das Beschichtungsmittel zusätzlich vollständig frei von Isocyanat-haltigen Vernetzern ist.

Neben der oben beschriebenen thermischen Härtung mit Fremdvernetzung sind natürlich weitere Härtungsmechanismen, beispielsweise eine anteilige physikalische Härtung (das heißt die Härtung einer Schicht aus einem Beschichtungsmittel durch Verfilmung durch Lösemittelabgabe aus dem Beschichtungsmittel, wobei die Verknüpfung innerhalb der Beschichtung über Schlaufenbildung der Polymermoleküle der Bindemittel), nicht ausgeschlossen.

Bevorzugt ist aber, dass das Beschichtungsmittel durch Einsatz eines hydroxyfunktionellen Polymers (B) als Bindemittel, insbesondere eines Polyesters (B), und mindestens einem Polymer (A) jedenfalls fremdvernetzend ist.

Die Funktionalität der Polymere (B) bezüglich der vorstehend beschriebenen reaktiven funktionellen Gruppen kann sehr breit variieren und richtet sich insbesondere nach der Vernetzungsdichte, die man erzielen will. Beispielsweise liegt im Falle der bevorzugten hydroxylfunktionellen Bindemittel (B), insbesondere im Falle der bevorzugten hydroxyfunktionellen Acrylat-Polymere, Polyurethan-Polymere und/oder Polyester, ganz besonders bevorzugt Polyester, die OH-Zahl vorzugsweise bei 15 bis 350, bevorzugt 40 bis 325, besonders bevorzugt 50 bis 300, ganz besonders bevorzugt 60 bis 290 und insbesondere 60 bis 150 mg KOH/g nach DIN 53240.

Geeignete Bindemittel (B), insbesondere die Acrylat-Polymere, Polyurethan-Polymere und/oder Polyester, ganz besonders bevorzugt die Polyester, weisen beispielsweise ein zahlenmittleres Molekulargewicht von 500 bis 10000 g/mol auf, es kann aber auch niedriger oder höher, insbesondere höher, sein. Das gewichtsmittlere Molekulargewicht liegt beispielsweise im Bereich von 2000 bis 20000 g/mol.

Enthalten sein kann ein Acrylat-Polymer (B). Acrylat-Polymere bezeichnet man bekanntermaßen auch als (Meth)Acrylat(co)polymerisate. Geeignete Acrylat-Polymere können nach den dem Fachmann bekannten Methoden unter Verwendung der in diesem Zusammenhang bekannten olefinisch ungesättigten Monomere mit reaktiven funktionellen Gruppen (insbesondere Hydroxylgruppen), in der Regel in Kombination mit Monomeren ohne reaktive funktionelle Gruppen, hergestellt werden. In diesem Zusammenhang sei auch auf die oben beschriebene Herstellung der Copolymere (A) verwiesen.

Die ebenfalls als Polymere (B) einsetzbaren Polyurethan-Polymere werden beispielsweise in dem Fachmann bekannter Weise erhalten durch Umsetzung von Polyolen wie Polyester- und Polyetherpolyolen mit Verbindung enthaltend isocyanatreaktive funktionelle Gruppen. Derartige Polyurethan-Polymere sind beispielsweise in den europäischen Patentanmeldungen EP 228003 und EP 574417 beschrieben.

Ebenfalls als Polyurethanharze (B) sind sogenannte acrylierte Polyurethanharze geeignet, die bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Geeignete acrylierte Polyurethanharze beziehungsweise entsprechende Pfropfmischpolymerisate sind beispielsweise in der WO 01/25307 Seite 5, Zeile 14, bis Seite 45, Zeile 4, und der EP-B-787 159, Seite 2, Zeile 27, bis Seite 7, Zeile 13, beschrieben.

Die ebenfalls als Polymere (B) geeigneten und im Rahmen der vorliegenden Erfindung bevorzugten Polyester können gesättigt oder ungesättigt, insbesondere gesättigt sein.

Solche Polyester und deren Herstellung sowie die bei dieser Herstellung einsetzbare Komponenten sind dem Fachmann bekannt und werden beispielsweise in der EP-B-787 159 beschrieben.

Es handelt sich um Polymere, die unter Einsatz mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Entsprechend werden die Polyester in der Regel der Gruppe der Polykondensationsharze zugeordnet. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Geeignete Diole, höherfunktionelle Alkohole (OH-Funktionalität größer 2) Dicarbonsäuren oder ihre Anhydride oder auch Hydroxycarbonsäuren sind bekannt.

Die beschriebenen bevorzugten Polymere (B) als Bindemittel, das heißt die Acrylat-Polymere, Polyurethan-Polymere und/oder Polyester, können für sich oder auch in Kombination miteinander in dem erfindungsgemäßen Beschichtungsmittel eingesetzt werden.

Neben den oder anstelle der Acrylat-Polymeren, Polyurethan-Polymeren und/oder Polyestern (B) können auch weitere Polymere als Bindemittel eingesetzt werden. Entsprechende, im Bereich der Automobilindustrie in pigmentierten Lacken, insbesondere Basislacken, üblicherweise eingesetzte Bindemittel sind dem Fachmann bekannt und können von diesem problemlos ausgewählt werden.

Beispielhaft seien partiell verseifte Polyvinylester, Alkyde, Polylactone, Polycarbonate, Polyether, Epoxidharz-Amin-Addukte, Polyharnstoffe, Polyamide, Polyimide oder auch Cellulose-basierte Polymere wie Celluloseacetobutyrate genannt.

Der Gehalt von weiteren Bindemitteln (B), insbesondere Acrylat-Polymeren, Polyurethan-Polymeren und/oder Polyestern, ganz besonders bevorzugt Polyestern, beträgt bevorzugt 6 bis 30 Gew.-%, insbesondere bevorzugt 8 bis 25 Gew.-%, ganz besonders bevorzugt 10 bis 20 Gew.-% und in einer besonderen Ausführungsform 12 bis 18 Gew.-%, jeweils bezogen auf die Gesamtmenge des erfindungsgemäßen Beschichtungsmittels.

Vorteilhafterweise können in den erfindungsgemäßen Beschichtungsmitteln noch Polymermikroteilchen (M) eingesetzt werden. Geeignete Polymermikroteilchen sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben. Die Polymermikroteilchen können insbesondere zur Steuerung des Verlaufs, des Abdunstverhaltens und des Anlöseverhaltens durch den Klarlack eingesetzt werden.

Geeignete Polymermikroteilchen weisen üblicherweise ein zahlenmittleres Molekulargewicht von 2000 bis 100000 g/mol auf. Die Bestimmung des Molekulargewichts erfolgt mittels GPC-Analyse mit THF (+ 0,1% Essigsäure) als Eluent (1 ml/min) auf einer Styrol-Divinylbenzol-Säulenkombination. Die Kalibrierung wird mit Polystyrol-Standards durchgeführt.

Geeignete Polymermikroteilchen weisen außerdem üblicherweise eine mittlere Teilchengröße von 0,01 bis 10 µm, insbesondere von 0,01 bis 5 µm, und ganz besonders bevorzugt von 0,02 bis 2 µm, nach ISO 13320-1 auf.

Besonders bevorzugt eingesetzte Polymermikroteilchen weisen reaktive funktionelle Gruppen auf, die mit den funktionellen Gruppen von Vernetzungsmitteln wie dem Copolymer (A) reagieren können. Insbesondere weisen die Polymermikroteilchen dabei Hydroxylgruppen auf. Hierbei weisen die Polymermikroteilchen bevorzugt eine Hydroxylzahl von 5 bis 150 mg KOH/g nach DIN 53240 auf. Hydroxylgruppenhaltige Polymermikroteilchen sind beispielsweise in der WO 01/72909 beschrieben.

Vernetzte Polymermikroteilchen sind beispielsweise dadurch erhältlich, indem ein Gemisch aus:
(a) einem ethylenisch ungesättigten Monomeren, das eine ethylenisch ungesättigte Gruppe pro Molekül enthält oder ein Gemisch aus solchen Monomeren und
(b) einem ethylenisch ungesättigten Monomeren, das mindestens zwei ethylenisch ungesättigte Gruppen pro Molekül enthält oder ein Gemisch aus solchen Monomeren in einer wässrigen Phase gegebenenfalls in Gegenwart von Emulgatoren oder gegebenenfalls in Gegenwart eines Trägerharzes, bevorzugt einem Polyester, polymerisiert und die auf diese Weise erhaltene wässrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionischen und/oder polaren Gruppen, vorzugsweise Hydroxylgruppen und/oder Carboxylgruppen, enthaltenden Komponenten hergestellt worden sind. Die Komponenten (a) und (b) sollten in der Regel zwischen 1 und 20 Gew.-%, bevorzugt zwischen 3 und 15 Gew.-% ionische und/oder polare Gruppen enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente (b) einzusetzen.

Die in den Beschichtungsmitteln eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus:
(c) einem ethylenisch ungesättigten Monomeren (M1), das mindestens eine reaktive Gruppe (G1) pro Molekül enthält oder ein Gemisch aus solchen Monomeren (M1) und
(d) gegebenenfalls einem ethylenisch ungesättigten Monomeren (M2), das mindestens eine, von (G1) verschiedene, reaktive Gruppe (G2) pro Molekül enthält oder ein Gemisch aus solchen Monomeren (M2) und
(e) gegebenenfalls einem weiteren ethylenisch ungesättigten Monomeren (M3) oder ein Gemisch aus solchen Monomeren (M3)
einer Polymerisation in einem organischen Lösemittel gegebenenfalls in Gegenwart eines Trägerharzes, bevorzugt einem Polyester, unterworfen wird.

Geeignete Monomere (M1) sind beispielsweise Monomere, die Hydroxylgruppen, Carbamatgruppen, Aminogruppen, Alkoxymethyl-aminogruppen, Allophanatgruppen oder Iminogruppen, insbesondere Hydroxylgruppen, als reaktive Gruppen enthalten.

Die Monomeren (M1) mit den reaktiven Gruppen (G1) können dabei auch durch Reaktion zweier Verbindungen, von denen eine erste Verbindung eine reaktive Gruppe und mindestens eine ethylenisch ungesättigte Doppelbindung und die andere Verbindung eine mit den reaktiven Gruppen der ersten Verbindung reaktive Gruppe und gegebenenfalls eine ethylenisch ungesättigte Doppelbindung aufweist, hergestellt werden.

Geeignete Monomere (M2) sind beispielsweise Monomere, die Carboxylgruppen enthalten.

Geeignete Monomere (M3) sind die üblicherweise eingesetzten, sogenannten Neutralmonomere, also ethylenisch ungesättigte Monomere, die keine reaktiven Gruppen aufweisen.

Aus Obigem folgt, dass es sich bei den polymeren Mikroteilchen auch um Polymere handelt, die ebenfalls zur Filmbildung beitragen können, insbesondere durch Fremdvernetzung mit den Copolymeren (A). Es handelt sich demnach ebenfalls um Bindemittelkomponenten. Aufgrund ihres jedenfalls vorhandenen Teilchencharakters, insbesondere den wie oben beschrieben messbaren Teilchengrößen, werden sie aber im Rahmen der vorliegenden Erfindung getrennt von den Bindemitteln (B) betrachtet. Dies schließt natürlich nicht aus, dass auch die Bindemittel (B) in bestimmten Lösemitteln aggregierte Teilchen und/oder Mikroteilchen bilden können.

Die Polymermikroteilchen (M) können in den erfindungsgemäßen Beschichtungsmitteln beispielsweise in einer Menge von 2 bis 30 Gew.-%, insbesondere von 3 bis 20 Gew.-%, jeweils bezogen auf das Gesamtgewicht des Beschichtungsmittels, eingesetzt werden.

Außer den vorstehend beschriebenen Komponenten kann das erfindungsgemäße Beschichtungsmittel übliche und bekannte Hilfs- und Zusatzstoffe in üblichen Mengen enthalten, bevorzugt 0,5 bis 40 Gew.-% und besonders bevorzugt 0,5 bis 30 Gew.-%, insbesondere 0,5 bis 15 Gew.-%, jeweils bezogen auf das Gesamtgewicht des jeweiligen Beschichtungsmittels.
Beispiele für geeignete Hilfs- und Zusatzstoffe sind organische und anorganische Füllstoffe, beispielsweise Talkum oder pyrogene Kieselsäuren, und/oder sowie weitere übliche Hilfs- und Zusatzstoffe, wie beispielsweise Antioxidantien, Entlüftungsmittel, Netzmittel, Katalysatoren, Dispergiermittel, Emulgatoren, Rheologiehilfsmittel wie Verlaufsmittel, Verdickungsmittel, Antiablaufmittel und Thixotropiermittel, Wachse, Slipadditive, Reaktivverdünner, Rieselhilfen, Sikkative, Bioziden, Additive zur Verbesserung der Untergrundbenetzung, Additive zur Verbesserung der Oberflächenglätte, Mattierungsmittel, Radikalfänger, Lichtschutzmittel, vorzugsweise die oben beschriebenen UV-Absorber mit einem Absorptionsmaximum unter 370 nm und/oder HALS, Korrosionsinhibitoren, Flammschutzmittel oder Polymerisationsinhibitoren, wie sie in dem Buch "Lackadditive" von Johan Bieleman, Wiley-VCH, Weinheim, New York, 1998, im Detail beschrieben werden. Als Katalysatoren können beispielsweise typische für die Vernetzung von Silangruppen bekannte Phosphorbasierte Katalysatoren eingesetzt werden, wie beispielsweise die in WO 2008/074489 A1, Seite 6, Zeile 7 bis Seite 9, Zeile 24 beschriebenen Katalysatoren. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber und Netzmittel sowie Füllstoffe, unter denen pyrogene Kieselsäuren bevorzugt sind.

Der Festkörpergehalt des Beschichtungsmittels beträgt bevorzugt mindestens 20 %, bevorzugt 20 bis 55 %, darunter bevorzugt bis zu 50 %, insbesondere bis zu 45 % und besonders vorteilhaft bis zu 40 %. Besonders bevorzugt Bereiche sind von 20 bis 55 %, insbesondere 20 bis 50 %, besonders bevorzugt 20 bis 45 % und ganz besonders vorteilhaft 20 bis 40 %. Nochmals bevorzugt ist der Bereich 20 bis 30 Gew.-%.

Der Festkörpergehalt wird im Rahmen der vorliegenden Erfindung, sofern nichts anderes angegeben ist, nach DIN EN ISO 3251 mit einer Einwaage von 1,0 g Probe, beispielsweise 1,0 g des erfindungsgemäßen Beschichtungsmittels, bei einer Prüfdauer von 60 min und bei einer Temperatur von 125 °C bestimmt.

Diese Prüfmethode wird ebenfalls angewandt, um beispielsweise den Anteil verschiedener Komponenten des Beschichtungsmittels an der Gesamtzusammensetzung festzulegen. So kann beispielsweise der Festkörper einer Bindemitteldispersion eines Polymers (B), welche dem Beschichtungsmittel zugegeben wird, entsprechend bestimmt werden, um den Anteil dieses Polymers (B) an der Gesamtkomposition festzulegen.

Unter den genannten Bedingungen, das heißt bei den genannten Festkörpergehalten, weisen bevorzugte erfindungsgemäße pigmentierte Beschichtungsmittel bei 23°C eine Viskosität von 16 s bis 35 s und besonders bevorzugt 20 bis 28 s Auslaufzeit im Ford 3 Cup auf. Im Rahmen der vorliegenden Erfindung wird eine Viskosität in diesem Bereich als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann.

Neben dem erfindungsgemäßen Beschichtungsmittel werden bei der Herstellung von erfindungsgemäßen Mehrschichtlackierungen weitere Beschichtungsmittel eingesetzt.

Wie oben angegeben, wird zur Herstellung der erfindungsgemäßen Mehrschichtlackierung das erfindungsgemäße Beschichtungsmittel als Basislack eingesetzt und dann auf der Basislackschicht, bevorzugt auf der noch nicht ausgehärteten Basislackschicht, ein Klarlack aufgebracht (Nass-in-Nass). Auf diese Weise erhält man dann die erfindungsgemäße Mehrschichtlackierung umfassend mindestens eine Basislackierung und mindestens eine Klarlackierung.

Geeignete transparente Beschichtungsmittel sind beispielsweise in der WO 03/050194 A1, in der US 2008/076868 A1 und in der WO 06/063304 A1 beschrieben.

Bei den zur Herstellung der erfindungsgemäßen Mehrschichtlackierung ebenfalls einsetzbaren weiteren Beschichtungsmittel, insbesondere Grundierungen und Füller, handelt es sich um die dem Fachmann in diesem Zusammenhang bekannten, beispielsweise im Handel erhältlichen Beschichtungsmittel.

### Beispiele

### 1. Herstellung von erfindungsgemäßen und Vergleichs-Basislacken

Erfindungsgemäße Basislacke und Vergleichs-Basislacke sowie darin enthaltene Komponenten wurden wie folgt hergestellt.

### 1.1 Herstellung eines Polyesters (B) als Bindemittel

In einem 2L-Vierhalskolben mit Rührer, elektrischer Widerstandsheizung, Thermometer, Füllkörperkolonne gefüllt mit Pall-Ringen, ausgestattet mit Kopfthermometer, Destillationsbrücke, Kondensatkühler und Vorlage werden eingewogen 81,0 Gew.-Teile 1,6-Hexandiol, 108,0 Gew.-Teile Neopentylglykol, 28,0 Gew.-Teile Glyzerin, 38,0 Gew.-Teile Trimethylolpropan, 99,0 Gew.-Teile Adipinsäure, 157,0 Gew.-Teile Phthalsäureanhydrid und 125,0 Gew.-Teile Isophthalsäure. Das Reaktionsgemisch wird unter Rühren schnell auf 160°C erhitzt und 30 min auf 160°C gehalten. Von 160°C wird die Temperatur innerhalb 1,5 Stunden auf 190°C so gesteigert, dass die KolonnenKopftemperatur 103°C nicht übersteigt. Dann wird auf 150 °C abgekühlt und es werden 63,0 Gew.-Teile Cardura E 10 P und 7,0 Gew.-Teile Xylol zugegeben und anschließend wird erhitzt und eine Stunde bei 165°C gehalten. Dann wird auf 230°C erhitzt und auf 230°C gehalten, bis die Säurezahl einen Wert von 10 mg KOH/g (gemessen nach DIN EN ISO 2114:2002-06) unterschreitet. Der Epoxy-modifizierte Polyester wird weiter abgekühlt und mit einer Mischung von 238,0 Gew.-Teile Solventnaphtha 155/185, 24,0 Gew.-Teile 1-Methoxipropylacetate und 35,0 Gew.-Teile Ethylethoxypropionate angelöst. Es resultiert eine 65%-ige Bindemittellösung (Festkörpergehalt). Der so erhaltene Epoxy-modifizierte Polyesters weist eine Säurezahl von 10 mg KOH/g und eine OH-Zahl von 106 mg KOH/g auf, jeweils bezogen auf den Festkörper. Das gewichtsmittlere Molekulargewicht beträgt 8600 g/mol.

### 1.2 Herstellung polymerer Mikroteilchen

Zunächst erfolgt die Herstellung eines Trägerharzes: In einem Reaktor werden 5,762 Gew.-Teile Xylol, 5,762 Gew.-Teile Toluol, 0,179 Gew.-Teile Methansulfonsäure vorgelegt und auf 104°C erhitzt. Anschließend werden 80,615 Gew.-Teile 12-Hydroxystearinsäure dem Reaktor zugefahren und bei 171°C im Rückfluss unter Entzug des Reaktionswassers gekocht. Die Reaktion ist bei Erreichung einer Säurezahl von 35 beendet. Nach Abkühlen wird der Festkörper mit Solventnaphtha auf 80 Gew.-Teile eingestellt.

Dann werden die eigentlichen polymeren Mikroteilchen hergestellt: In einem Reaktor werden 43,2 Gew.-Teile Solventnaphtha, 0,08 Gew.-Teile N,N-Dimethylcocosamin und 1,0 Gew.-Teile Ethylacetat vorgelegt und auf 104°C erhitzt. Der Reaktor wird unter Druck von 0,69 bar (69.000 Pascal) gesetzt und innerhalb von 2 h simultan mit einer Monomerenmischung bestehend aus 27,6 Gew.-Teilen Methylmethacrylat, 3,8 Gew.-Teilen 2-Hydroxypropylmethacrylat, 0,8 Gew.-Teilen Glycidylmethacrylat, 12,8 Gew.-Teilen des oben beschriebenen Trägerharzes, 1,5 Gew.-Teilen Methacrylsäure und 1,5 Gew.-Teilen Octylmercaptan und einer Initiatormischung bestehend aus 2,3 Gew.-Teilen Tert.-Butyl-per-oxy-2-ethylhexanoat und 5,1 Gew.-Teilen Solventnaphtha versetzt. Anschließend wird 3 h bei oben genannter Temperatur und Druck gehalten, bevor abgekühlt und mit Solventnaphtha auf einen Festkörper von 31,0% eingestellt wird.

### 1.3 Herstellung einer Wachsdispersion

6,00 Gew.-Teile des Polyethylenwachses EVA 1 von der BASF AG (= handelsübliches Polyethylenwachs auf Basis eines Ethylen/Vinylacetat-Copolymeren mit einem Schmelzpunkt von 87-92 °C, einem Tropfpunkt nach Ubbelohde von ca. 95°C und einem massenmittleren Molekulargewicht (viskosimetrisch) von ca. 6500 g/mol) und 40,00 Gew.-Teile Xylol werden unter langsames Rühren bei 100°C gelöst. Unter weiterem Rühren lässt man die Lösung auf 70°C abkühlen und gibt langsam 54,00 Gew.-Teile Butylacetat (technisch, ca. 85 %ig) zu, wobei eine erwünschte Wachsfällung beginnt. Unter weiterem Rühren lässt man die Dispersion weiter bis auf 35°C abkühlen.

### 1.4 Herstellung einer Lösung von Celluloseacetobutyrat (CAB)

In einer Vorlage werden 85,0 Gew.-Teile Butylacetat mit 15,0 Gew.-Teile CAB 551-0.2 (handelsübliche Celluloseacetobutyrat der Firma Eastman) für 30 min gemischt.

### 1.5 Herstellung eines Copolymers (A)

In einem Reaktor werden 515,5 Gew.-Teile Shellsol A vorgelegt und auf 145°C erhitzt. Der Reaktor wird unter Druck gesetzt (3,5 bar bzw. 350.000 Pascal). Danach wird über einen Zeitraum von 4,75 h eine Initiatorlösung (96 Gew.-Teile Di-tert.-butylperoxid in 98,7 Gew.-Teilen Shellsol A) und über einen Zeitraum von 4,25 h eine Monomerenmischung bestehend aus 899,0 Gew.-Teilen Methylmethacrylat, 899,0 Gew.-Teilen n-Butylacrylat und 449,4 Gew.-Teilen Geniosil XL 10 (Fa. Wacker) (Vinyltrimethoxysilan) unter Rühren gleichmäßig zudosiert. Dabei wird mit dem Zulauf der Initiatorlösung 0,25 h vor dem Zulauf der Monomerenmischung begonnen. Nach vollständiger Zugabe der Initiatorlösung (0,25 h nach Abschluss der Zugabe der Monomerenmischung) wird für 10 min bei der angegebenen Temperatur und angegebenem Druck weitergerührt, bevor dann nochmals eine Lösung bestehend aus 17,1 Gew.-Teilen Di-tert.-butylperoxid in 25,3 Gew.-Teilen Shellsol A gleichmäßig innerhalb von 20 min zugegeben wird. Anschließend wird für weitere 3 h bei der angegebenen Temperatur und dem angegebenen Druck gehalten. Danach wird das Reaktionsgemisch auf 60°C abgekühlt und auf Normaldruck eingestellt. Der Festkörper der so erhaltenen Lösung eines Copolymers (A) beträgt 76,5 %. Das Copolymer (A) besitzt ein zahlenmittleres Molekulargewicht von 1781 g/mol und ein gewichtsmittleres Molekulargewicht von 5530 g/mol. Die Glasübergangstemperatur des Copolymers (A) beträgt -4°C.

Zur Herstellung eines erfindungsgemäßen Basislacks 1 (E-1) und der Vergleichs-Basislacke V-1 und V-2 wurden die in Tabelle 1 aufgeführten Komponenten in den angegebenen Mengen (Gewichtsteile) vermischt und die resultierende Mischung homogenisiert. Zur Einstellung der Applikationsviskosität (Spritzviskosität) erfolgte jeweils ein nochmaliger Zusatz von Butylacetat. Tabelle 1 zeigt zudem die Festkörpergehalte (FK), den Pigmentgehalt (PG), den Gehalt an organischen Lösemitteln (LM) und den Bindemittelgehalt (BM) der eingesetzten Komponenten sowie den Festkörpergehalt und die Viskosität der resultierenden Basislacke.

**Tabelle 1: Zusammensetzungen und Kenndaten der Basislacke E-1, V-1 und V-2**

| | **FK (%)** | **BM (%)** | **LM (%)** | **PG (%)** | **V-1** | **V-2** | **E-1** |
|---|---|---|---|---|---|---|---|
| Wachsdispersion (1.3) | 6 | 6 | 94 | 0 | 15,0 | 15,0 | 15,0 |
| Polymere Mikroteilchen (1.2) | 31 | 31 | 69 | 0 | 10,0 | 17,0 | 17,0 |
| Maprenal MF650 | 55 | 55 | 45 | 0 | 14,0 | 0,0 | 0,0 |
| Lösung Copolymer (A) (1.5) | 76,5 | 76,5 | 23,5 | 0 | 0,0 | 0,0 | 0,1 |
| Butylacetat | 0 | 0 | 100 | 0 | 10,0 | 10,0 | 10,0 |
| Polyester (1.1) | 65 | 65 | 35 | 0 | 15,0 | 22,0 | 22,0 |
| CAB (1.4) | 15 | 15 | 85 | 0 | 20,0 | 20,0 | 20,0 |
| Butylacetat | 0 | 0 | 100 | 0 | 5,0 | 5,0 | 5,0 |
| Aluminiumpigment | 70 | 0 | 30 | 70 | 3,5 | 3,5 | 3,5 |
| Butylacetat | 0 | 0 | 100 | 0 | 7,5 | 7,5 | 7,4 |
| | **Summe [%]** | | | | 100,0 | 100,0 | 100,0 |
| | **Festkörper [%]** | | | | 27,1 | 26,1 | 26,2 |
| | **Anfallviskosität (Ford 3 Cup, 23°C)** | | | | 34 | 37 | 35 |
| | **Zusatz Butylacetat** | | | | 7 | 10 | 9 |
| | **Festkörper bei Applikation [%]** | | | | 26,5 | 26,1 | 26,2 |
| | **Applikationsviskosität (Ford 3 Cup, 23°C)** | | | | 26 | 26 | 26 |

| | | | | | | | |
|---|---|---|---|---|---|---|---|
| Maprenal MF650: Melaminharz in Isobutanol, Fa. Ineos Aluminiumpigment: Stapa Metallux 2192, Fa. Eckart) | | | | | | | |

Alle Basislacke besitzen einen Festkörpergehalt von etwa 26 % und haben dabei bei 23°C eine Viskosität von 26 s Auslaufzeit im Ford 3 Cup (Spritzviskosität).

Während der Vergleichs-Basislack V1 noch ein Formaldehyd-basiertes Melaminharz als Vernetzer enthält, wird dieses im Vergleichs-Basislack V2 vollständig weggelassen. Beide Basislacke V-1 und V-2 enthalten kein Copolymer (A). Der erfindungsgemäße Basislack E-1 enthält, bezogen auf die Gesamtmenge des Beschichtungsmittels bei Applikationsviskosität, 0,07 Gew.-% des Copolymer (A) und ist zudem vollständig frei von Melaminharzen.

Durch Variation des Anteils des Copolymers (A) wurden weitere erfindungsgemäße Basislacke und zwei weitere vergleichende Basislacke hergestellt. Dabei wurde der variierte Zusatz des Copolymers (A) durch entsprechend variierten Zusatz von Butylacetat bei der dritten Butylacetat-Zugabe (bei E-1 waren dies 7,4 Gew.-Teile) ausgeglichen (Summe von 100 Gew.-Teilen bei Anfallviskosität). Alle Basislacke wurden durch Zusatz von nochmals 9 bis 10 Gew.-Teilen Butylacetat auf eine Applikationsviskosität von 26 s (Ford 3 Cup, 23°C) eingestellt. All diese Basislacke wiesen bei Applikationsviskosität einen Festkörper zwischen 25 und 26,5 % auf.

Tabelle 2 gibt einen Überblick. Der Basislack E-1 ist nochmals der besseren Übersichtlichkeit halber aufgeführt. Angegeben ist zudem der jeweilige Anteil des Copolymers (A), bezogen auf die Gesamtmenge des jeweiligen Basislacks (bei Applikationsviskosität) .

**Tabelle 2:**

| | **E-1** | **E-2** | **E-3** | **E-4** | **E-5** | **E-6** | **E-7** | **V-3** | **V-4** |
|---|---|---|---|---|---|---|---|---|---|
| **Lösung Copolymer (A) (1.5)** | 0,1 | 0,2 | 0,3 | 0,4 | 0,5 | 0,7 | 1,0 | 1,2 | 2,0 |
| **Gehalt an Copolymer (A) (Gew.-%)** | 0,07 | 0,14 | 0,21 | 0,28 | 0,34 | 0,48 | 0,7 | 0,84 | 1,4 |

### 2. Herstellung von Vergleichs- und erfindungsgemäßen Mehrschichtlackierungen

Für die Prüfung von anwendungstechnischen Eigenschaften wurden zunächst Mehrschichtlackierungen unter Einsatz der unter 1. beschriebenen Basislacke in üblicher und bekannter Weise auf Prüftafeln der Abmessungen 30 x 20 cm hergestellt.

Hierzu wurden KTL-beschichtete Stahlprüftafeln mit einem handelsüblichen konventionellen, grauen Füller auf Polyester-Basis der Firma BASF Coatings AG beschichtet, wonach die resultierenden Füllerschichten für 5 min bei 20°C und einer relativen Luftfeuchtigkeit von 65% abgelüftet und in einem Umluftofen für 5 min bei 165°C Objekttemperatur eingebrannt wurden.

Nach dem Abkühlen der Prüftafeln auf 20 °C wurden die Basislacke durch ESTA-Spritzautomatenapplikation aufgetragen, sodass nach der später erfolgenden Härtung eine Trockenfilmschichtdicke von 17-19 Mikrometern resultiert. Anschließend wurden die Basislackschichten während 5 Minuten abgelüftet und mit einem lösemittelhaltigen Ein-Komponenten-Klarlack der Firma BASF Coatings GmbH überschichtet, sodass nach der folgenden Härtung eine Trockenfilmschichtdicke von 37-39 Mikrometern resultiert. Hiernach wurde für eine Ruhezeit von 5 Minuten abgelüftet und dann die Basislackschichten und die überschichteten Klarlackschichten für 20 Minuten bei 140°C Objekttemperatur gemeinsam eingebrannt. Es resultierten Vergleichs- und erfindungsgemäße Mehrschichtlackierungen.

Tabelle 3 gibt einen Überblick über die hergestellten Mehrschichtlackierungen M und die bei der Herstellung der Mehrschichtlackierungen eingesetzten Basislacke. Zudem angegeben ist der jeweilige Gehalt des Copolymers (A), jeweils bezogen auf die Gesamtmenge des jeweiligen Basislacks.

**Tabelle 3:**

| **Mehrschichtlackierung** | MV-1 | MV-2 | ME-1 | ME-2 | ME-3 | ME-4 | ME-5 | ME-6 | ME-7 | MV-3 | MV-4 |
|---|---|---|---|---|---|---|---|---|---|---|---|
| **Basislack** | V-1 | V-2 | E-1 | E-2 | E-3 | E-4 | E-5 | E-6 | E-7 | V-3 | V-4 |
| **Gehalt (A) (Gew.-%)** | - | - | 0,07 | 0,14 | 0,21 | 0,28 | 0,34 | 0,48 | 0,7 | 0,84 | 1,4 |

Neben den beschriebenen Mehrschichtlackierungen wurden zur Untersuchung der anwendungstechnologischen Eigenschaften unterschiedliche Reparaturlackierungen hergestellt. Hierzu wurden die wie oben beschriebenen Mehrschichtlackierungen mit einem Schleifpapier angeschliffen und nochmals mittels ESTA-Spritzautomatenapplikation die Basislacke V-1 bis V-4 und E-1 bis E-7 so aufgetragen, dass nach der später erfolgenden Härtung eine Trockenfilmschichtdicke von 17-19 Mikrometern resultiert. Anschließend wurden die Basislackschichten während 5 Minuten abgelüftet und mit einem lösemittelhaltigen Ein-Komponenten-Klarlack der Firma BASF Coatings GmbH überschichtet, sodass nach der folgenden Härtung eine Trockenfilmschichtdicke von 37-39 Mikrometern resultiert. Hiernach wurden die Basislackschichten und die Klarlackschichten für 20 Minuten bei 140 °C Objekttemperatur eingebrannt. Es resultierten Vergleichs- und erfindungsgemäße Mehrschichtlackierungen.

Tabelle 4 gibt einen Überblick über die hergestellten Reparatur-Mehrschichtlackierungen RM und die bei der Herstellung der Reparatur-Mehrschichtlackierungen eingesetzten Basislacke. Zudem angegeben ist der jeweilige Gehalt des Copolymers (A), jeweils bezogen auf die Gesamtmenge des jeweiligen Basislacks.

**Tabelle 4:**

| **Reparatur-Mehrschicht-lackierung** | RMV-1 | RMV-2 | RME-1 | RME-2 | RME-3 | RME-4 | RME-5 | RME-6 | RME-7 | RMV-3 | RMV-4 |
|---|---|---|---|---|---|---|---|---|---|---|---|
| **Basislack** | V-1 | V-2 | E-1 | E-2 | E-3 | E-4 | E-5 | E-6 | E-7 | V-3 | V-4 |
| **Gehalt (A) (Gew.-%)** | - | - | 0,07 | 0,14 | 0,21 | 0,28 | 0,34 | 0,48 | 0,7 | 0,84 | 1,4 |

### 3. Anwendungstechnische Untersuchung

Die Zwischenschichthaftung der nach dem in Abschnitt 2. angegebenen Verfahren hergestellten Mehrschichtlackierungen und Reparatur-Mehrschichtlackierungen wurde mit dem Gitterschnitttest nach Ford Testmethode BI 106-01 geprüft. Die Bewertungsskala für die Gitterschnittprüfung nach Ford Testmethode BI 106-01 umfasst einen Bereich von 0-10, wobei eine Bewertung größer 2 auf ein potentielles Haftungsproblem hinweist.

Die Steinschlagfestigkeit der unter Abschnitt 2. beschriebenen Mehrschichtlackierungen und Reparatur-Mehrschichtlackierungen wurde gemäß Ford Testmethode BI 157-06 geprüft. Die Bewertungsskala für die Steinschlagprüfung nach Ford Testmethode BI 157-06 umfasst einen Bereich von 1-10, wobei Bewertungen kleiner 4 auf ein potentielles Haftungsproblem hinweisen.

Weiterhin wurde die Tukon-Härte der Mehrschichtbeschichtungen gemäß Ford Testmethode BI 112-02 bestimmt. Höhere Werte bedeuten eine höhere Härte. Ab einem Wert von mindestens 7,5 kann von einer für eine Mehrschichtlackierung ausreichenden Härte gesprochen werden.

Tabelle 5 zeigt die erhaltenen anwendungstechnischen Ergebnisse

**Tabelle 5:**

| **Mehrschichtlackierung** | MV-1 | MV-2 | ME-1 | ME-2 | ME-3 | ME-4 | ME-5 | ME-6 | ME-7 | MV-3 | MV-4 |
|---|---|---|---|---|---|---|---|---|---|---|---|
| **Basislack** | V-1 | V-2 | E-1 | E-2 | E-3 | E-4 | E-5 | E-6 | E-7 | V-3 | V-4 |
| **Gehalt (A) (Gew.-%)** | - | - | 0,07 | 0,14 | 0,21 | 0,28 | 0,34 | 0,48 | 0,7 | 0,84 | 1,4 |
| **Gitterschnitt** | 0 | 2 | 0 | 0 | 0 | 0 | 0 | 0 | 0 | 0 | 0 |
| **Steinschlag** | 7 | 7 | 8 | 6 | 6 | 6 | 7 | 7 | 7 | 7 | 7 |
| **Tukon-Härte** | 11,6 | 11,2 | 11,1 | 10,8 | 10,5 | 11,5 | 11,3 | 10,8 | 10,9 | 10,5 | 9,9 |
| | | | | | | | | | | | |

| **Reparatur-Mehrschichtlackierung** | RMV-1 | RMV-2 | RME-1 | RME-2 | RME-3 | RME-4 | RME-5 | RME-6 | RME-7 | RMV-3 | RMV-4 |
|---|---|---|---|---|---|---|---|---|---|---|---|
| **Basislack** | V-1 | V-2 | E-1 | E-2 | E-3 | E-4 | E-5 | E-6 | E-7 | V-3 | V-4 |
| **Gehalt (A) (Gew.-%)** | - | - | 0,07 | 0,14 | 0,21 | 0,28 | 0,34 | 0,48 | 0,7 | 0,84 | 1,4 |
| **Gitterschnitt** | 0 | 3 | 1 | 0 | 0 | 0 | 0 | 0 | 0 | 5 | 5 |
| **Steinschlag** | 5 | 3 | 7 | 4 | 4 | 4 | 4 | 3 | 2 | 1 | 1 |

Während die Systeme MV-1 und RMV-1 (Melaminharz-haltig) gute anwendungstechnische Eigenschaften aufweisen, jedoch durch das enthaltene Formaldehyd-haltige Melaminharz unter ökologischen Gesichtspunkten stark verbesserungswürdig sind, lassen die anwendungstechnischen Eigenschaften bei den Systemen MV-2 und RMV-2 (kein Melaminharz, kein Copolymer (A)) deutliche Nachteile bei den anwendungstechnischen Eigenschaften erkennen. Insbesondere das Reparatursystem weist eine nicht mehr akzeptable Zwischenschichthaftung und eine bereits leicht herabgesetzte Steinschlagfestigkeit auf. Bereits der geringfügige Zusatz eines Copolymers (A) führt trotz des Verzichts auf ein Melaminharz zu verbesserten anwendungstechnischen Eigenschaften, sodass die Lackierungen wieder die Anforderungen zu erfüllen wissen. Bemerkenswerterweise verschlechtern sich die genannten Eigenschaften wiederum bei zu hohen Anteilen des Copolymers (A) im Bereich der Reparaturlackierung. Während das System RME-6 bereits eine leicht herabgesetzte Steinschlagfestigkeit besitzt und das System RME-7 eine nochmals weniger gute Steinschlagfestigkeit aufweist, sind Steinschlagfestigkeit und insbesondere Zwischenschichthaftung in den Systemen RMV-3 und RMV-4 nicht mehr akzeptabel.

Insgesamt zeigt sich, dass durch den Einsatz spezifisch abgestimmter Mengen des Copolymers (A) in pigmentierten Beschichtungsmitteln Lackierungen erhalten lassen, die trotz des Verzichts auf Melaminharze hervorragende anwendungstechnische Eigenschaften aufweisen, die den Eigenschaften Melamin-haltiger Systeme gleich kommen.

### 4. Herstellung weiterer Copolymere und deren Untersuchung

Es wurden weitere Copolymere auf Basis olefinisch ungesättigter Monomere (a) hergestellt und untersucht.

Die Herstellung der weiteren Copolymere erfolgte analog der oben unter Punkt 1.5 beschriebenen Herstellung eines Copolymers (A), wobei jedoch bestimmte Änderungen im Rahmen der Synthese vorgenommen wurden. Tabelle 6 nennt weitere Copolymere auf Basis von olefinisch ungesättigten Monomeren (a) und beschreibt zudem die Änderungen im Vergleich zu dem unter Punkt 1.5 beschriebenen Copolymer (A). Angegeben ist zudem die Glasübergangstemperatur der weiteren Copolymere.

**Tabelle 6**

| | Anteil Vinyltrimethoxysilan (bezogen auf die Monomere (a)) | Anteil Styrol (bezogen auf die Monomere (a)) | Glasübergangstemperatur T_{g} in °C |
|---|---|---|---|
| Copolymer (A) (aus 1.5) | 16 mol % | - | -4 |
| Copolymer (Vergleich) | 8 mol %¹ | - | -9 |
| Copolymer (A.b) | 32 mol %¹ | - | -5 |
| Copolymer (A.c) | 48 mol %¹ | - | -4 |
| Copolymer (A.d) | 16 mol % | 5,6 mol %² | -2 |
| Copolymer (A.e) | 16 mol % | 22,7 mol %² | -0 |
| Copolymer (A.f) | 16 mol % | 45,4 mol %² | -7 |

| | | | |
|---|---|---|---|
| ¹ Der variierte Anteil von Vinyltrimethoxysilan wurde durch Erhöhung beziehungsweise Herabsetzung der Anteile der Monomere Methylmethacrylat und n-Butylacrylat (Verhältnis 1:1) ausgeglichen. Beispielsweise wurden also bei der Herstellung des Copolymers (A.b) im Vergleich zur Herstellung des Copolymers (A) 4 mol % mehr Methylmethacrylat und 4 mol % mehr n-Butylacrylat eingesetzt. ² Der Zusatz von Styrol als Monomer wurde durch entsprechende Herabsetzung des Anteils von Methylmethacrylat ausgeglichen. | | | |

Die Copolymere (A), (Vergleich) sowie (A.b) und (A.c) wurden hinsichtlich ihrer Kompatibilität mit Komponenten von Basislacken untersucht. Dazu wurden Mischungen dieser Copolymere (als Lösungen mit einem Festkörper von 76,5 %) mit dem Polyester (B) (vergleiche Punkt 1.1, Festkörpergehalt von 65%) in einem Standglas vermischt (Gewichtsverhältnisse, auf Festkörper bezogen, von 1/4 und 1/1). Diese Mischungen wurden für 5 Tage stehen gelassen, anschließend auf eine Glastafel aufgezogen und bei 140°C für 20 min gehärtet. Die visuelle Bewertung erfolgte nach folgenden Kriterien:
(o) = "klarer Film" (keine Unverträglichkeit)
(-) = "milchig-trüber Film" (geringe Unverträglichkeit)
(x) = "Stippen, trüber Film" (Unverträglichkeit)

Tabelle 7 zeigt die Ergebnisse.

**Tabelle 7**

| | Mischung mit Polyester (B) (Punkt 1.1) 1/4 | Mischung mit Polyester (B) (Punkt 1.1) 1/1 |
|---|---|---|
| Copolymer (A) (aus 1.5) | (o) | (o) |
| Copolymer (Vergleich) | (o) | (o) |
| Copolymer (A.b) | (o) | (o) |
| Copolymer (A.c) | (-) | (x) |

Die Ergebnisse zeigen, dass die besonders bevorzugten erfindungsgemäßen Copolymere, welche einen Anteil von weniger als 35 mol-% von Vinyltrimethoxysilan aufweisen, den zusätzlichen Vorteil einer optimalen Verträglichkeit aufweisen.

Die in Tabelle 6 genannten Copolymere wurden zudem hinsichtlich ihres Gehalts an Restmonomeren (molarer Anteil Monomer im Vergleich zur bei der Herstellung ursprünglich eingesetzten Menge an Monomer) untersucht. Die Analyse erfolgte gaschromatographisch.

Dazu wurde zunächst eine Probe der jeweiligen Lösung eines Copolymers direkt nach der Herstellung auf 25°C abgekühlt und mit Hydrochinonmonomethylether als Inhibitor versetzt. Im nächsten Schritt wird die Probe in Tetrahydrofuran gelöst, es wird n-Pentan zugegeben und das Gemisch wird zentrifugiert. Der klare Überstand wird gaschromatographisch untersucht (25 m Silica-Kapillarsäule mit 5% Phenyl- ,1% Vinyl-Methylpolysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat). Die Ergebnisse sind in Tabelle 8 gezeigt.

**Tabelle 8**

| | Anteil Restmonomer Methylmethacrylat | Anteil Restmonomer n-Butylacrylat | Anteil Restmonomer Styrol | Anteil Restmonomer Vinyltrimethoxysilan |
|---|---|---|---|---|
| Copolymer (A) (aus 1.5) | n.n.¹ | n.n.¹ | n.a.² | 0,6 % |
| Copolymer (Vergleich) | n.n.¹ | n.n.¹ | n.a.² | 0,3 % |
| Copolymer (A.b) | n.n.¹ | n.n.¹ | n.a.² | 0,4 % |
| Copolymer (A.c) | n.n.¹ | n.n.¹ | n.a.² | 0,4 % |
| Copolymer (A.d) | n.n.¹ | n.n.¹ | n.n.¹ | 1,6 % |
| Copolymer (A.e) | n.n.¹ | n.n.¹ | n.n.¹ | 3,2 % |
| Copolymer (A.f) | n.n.¹ | n.n.¹ | n.n.¹ | 4,5 % |

| | | | | |
|---|---|---|---|---|
| ¹ nicht nachweisbar ² nicht anwendbar | | | | |

Die Ergebnisse zeigen, dass die vorteilhaften Ausführungen der erfindungsgemäßem Copolymere (A), das heißt die Copolymere (A), die keine oder nur geringe Anteile von aromatischen Struktureinheiten (vergleiche eingesetzte Menge von Styrol) enthalten, signifikant geringere Anteile am Restmonomer Vinyltrimethoxysilan enthalten. Die bevorzugten Varianten von Copolymeren (A) haben also den zusätzlichen Vorteil, dass schwer kontrollierbare Migrationsprozesse, Unverträglichkeiten und/oder Gesundheitsgefährdungen durch beispielsweise bei der Lagerung oder Härtung von Beschichtungsmitteln austretende Monomere minimiert werden.

## Patentansprüche

1. Lösemittelbasiertes, pigmentiertes Beschichtungsmittel, **dadurch gekennzeichnet, dass** es, bezogen auf die Gesamtmenge des Beschichtungsmittels, 0,02 bis 0,75 Gew.-% mindestens eines Copolymers (A) enthält, wobei das Copolymer (A) durch Copolymerisation einer Mischung von olefinisch ungesättigten Monomeren (a) in mindestens einem organischen Lösemittel erhältlich ist, die zu polymerisierende Mischung der Monomeren (a) aus
(a1) 10 bis 60 mol-% mindestens eines Monomers der folgenden Formel (I) 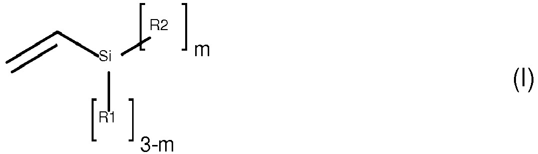 mit
R₁ = C₁- bis C₄-Alkoxy, R₂ = C₁- bis C₄-Alkyl und m = 0 bis 2,
sowie
(a2) 40 bis 90 mol-% mindestens eines weiteren olefinisch ungesättigten Monomers besteht und das Copolymer (A) eine Glasübergangstemperatur T_{g} von mindestens -30°C besitzt.

2. Beschichtungsmittel nach Anspruch 1, **dadurch gekennzeichnet, dass** es (B) mindestens ein Acrylat-Polymer, Polyurethan-Polymer und/oder Polyester als Bindemittel enthält.

3. Beschichtungsmittel nach Anspruch 2, **dadurch gekennzeichnet, dass** das Bindemittel (B) eine OH-Zahl von 15 bis 350 mg KOH/g aufweist.

4. Lösungsmittelbasiertes, pigmentiertes Beschichtungsmittel nach einem der Ansprüche 2 oder 3, **dadurch gekennzeichnet, dass** als Bindemittel (B) mindestens ein Polyester enthalten ist.

5. Beschichtungsmittel nach einem der Ansprüche 1 bis 4, **dadurch gekennzeichnet, dass** mindestens ein Aluminiumplättchenpigment als Pigment enthalten ist.

6. Beschichtungsmittel nach einem der Ansprüche 1 bis 5, **dadurch gekennzeichnet, dass** der Anteil des mindestens einen Copolymers (A), bezogen auf die Gesamtmenge des Beschichtungsmittels, von 0,03 bis 0,5 Gew.-% beträgt.

7. Beschichtungsmittel nach einem der Ansprüche 1 bis 6, **dadurch gekennzeichnet, dass** die Monomere (a2) zu mindestens 80 mol-%, bevorzugt zu 100 mol-%, ausgewählt sind aus der Gruppe bestehend aus Monomeren der Formeln H₂C=CH₂-(C=O)-O-Rₓ, H₂C=CH(CH₃)-(C=O)-O-Rₓ sowie H₂C=CH₂-O-(C=O)-Rₓ, wobei Rₓ ein Alkylrest mit 1 bis 20, bevorzugt 1 bis 10 Kohlenstoffatomen ist.

8. Beschichtungsmittel nach Anspruch 7, **dadurch gekennzeichnet, dass** neben den Copolymeren (A), die durch Einsatz von mindestens 80 mol-%, bevorzugt 100 mol-% von Monomeren (a2) ausgewählt aus der Gruppe bestehend aus Monomeren der Formel H₂C=CH₂-(C=O)-O-Rₓ, H₂C=CH(CH₃)-(C=O)-O-Rₓ sowie H₂C=CH₂-O-(C=O)-Rₓ, wobei Rₓ ein Alkylrest mit 1 bis 20, besonders bevorzugt 1 bis 10 Kohlenstoffatomen ist, erhältlich sind, keine weiteren Copolymere (A) enthalten sind.

9. Beschichtungsmittel nach einem der Ansprüche 1 bis 8, **dadurch gekennzeichnet, dass** das mindestens eine Copolymer (A) eine Glasübergangstemperatur T_{g} von -25 bis 50°C besitzt.

10. Verfahren zur Herstellung einer Mehrschichtlackierung, bei dem
(1) mindestens ein Basislack auf ein Substrat aufgebracht wird,
(2) aus dem in Stufe (1) aufgebrachten Basislack ein Polymerfilm gebildet wird,
(3) auf die so erhaltene Basislackschicht mindestens ein Klarlack aufgebracht wird und anschließend
(4) die Basislackschicht zusammen mit dem in Stufe (3) aufgebrachten Klarlack gehärtet wird,
**dadurch gekennzeichnet, dass** als Basislack ein Beschichtungsmittel nach einem der Ansprüche 1 bis 9 eingesetzt wird und wobei eine Klarlackschicht die oberste Schicht der Mehrschichtlackierung ist.

11. Verfahren nach Anspruch 10, **dadurch gekennzeichnet, dass** vor dem Aufbringen des Basislacks zunächst mindestens eine Grundierung und dann mindestens ein Füller auf das Substrat aufgebracht werden.

12. Verfahren nach einem der Ansprüche 10 oder 11, **dadurch gekennzeichnet, dass** als Substrat ein metallisches Substrat oder ein Kunststoffsubstrat eingesetzt wird.

13. Verfahren nach Anspruch 10, **dadurch gekennzeichnet, dass** es sich bei dem Substrat aus Stufe (1) um eine Mehrschichtlackierung handelt, welche Fehlstellen besitzt.

14. Mehrschichtlackierung, herstellbar nach einem Verfahren gemäß einem der Ansprüche 10 bis 13.

15. Verwendung eines Beschichtungsmittels nach einem der Ansprüche 1 bis 9 zur Verbesserung der mechanischen Eigenschaften von Mehrschichtlackierungen.

## Claims

1. Solventborne, pigmented coating composition, **characterized in that** it comprises, based on the total amount of the coating composition, 0.02 to 0.75 wt% of at least one copolymer (A), where the copolymer (A) is obtainable by copolymerization of a mixture of olefinically unsaturated monomers (a) in at least one organic solvent, the mixture of monomers (a) to be polymerized consisting of
(a1) 10 to 60 mol% of at least one monomer of the formula (I) below 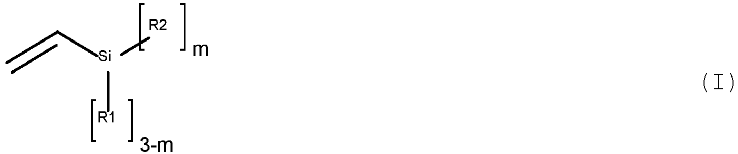 where
R₁ = C₁ to C₄ alkoxy, R₂ = C₁ to C₄ alkyl, and m = 0 to 2,
and also
(a2) 40 to 90 mol% of at least one further olefinically unsaturated monomer,
and the copolymer (A) possesses a glass transition temperature T_{g} of at least -30°C.

2. Coating composition according to Claim 1, **characterized in that** it comprises (B) at least one acrylate polymer, polyurethane polymer and/or polyester as binder.

3. Coating composition according to Claim 2, **characterized in that** the binder (B) has an OH number of 15 to 350 mg KOH/g.

4. Solventborne, pigmented coating composition according to either of Claims 2 and 3, **characterized in that** it comprises at least one polyester as binder (B).

5. Coating composition according to any of Claims 1 to 4, **characterized in that** it comprises as pigment at least one aluminum flake pigment.

6. Coating composition according to any of Claims 1 to 5, **characterized in that** the fraction of the at least one copolymer (A), based on the total amount of the coating composition, is from 0.03 to 0.5 wt%.

7. Coating composition according to any of Claims 1 to 6, **characterized in that** at least 80 mol%, preferably 100 mol%, of the monomers (a2) are selected from the group consisting of monomers of the formulae H₂C=CH₂-(C=O)-O-Rₓ, H₂C=CH(CH₃)-(C=O)-O-Rₓ, and H₂C=CH₂-O-(C=O)-Rₓ, where Rₓ is an alkyl radical having 1 to 20, preferably 1 to 10, carbon atoms.

8. Coating composition according to Claim 7, **characterized in that** it comprises no further copolymers (A) apart from the copolymers (A) obtainable by using at least 80 mol%, preferably 100 mol%, of monomers (a2) selected from the group consisting of monomers of the formulae H₂C=CH₂-(C=O)-O-Rₓ, H₂C=CH(CH₃)-(C=O)-O-Rₓ, and H₂C=CH₂-O-(C=O)-Rₓ, where Rₓ is an alkyl radical having 1 to 20, more preferably 1 to 10, carbon atoms.

9. Coating composition according to any of Claims 1 to 8, **characterized in that** the at least one copolymer (A) possesses a glass transition temperature T_{g} of -25 to 50°C.

10. Method for producing a multicoat paint system, by
(1) applying at least one basecoat material to a substrate,
(2) forming a polymer film from the basecoat material applied in stage (1),
(3) applying at least one clearcoat material to the resulting basecoat film, and then
(4) curing the basecoat film together with the clearcoat material applied in stage (3),
**characterized in that** a coating composition according to any of Claims 1 to 9 is used as basecoat material, with a clearcoat film being the topmost film of the multicoat paint system.

11. Method according to Claim 10, **characterized in that** before the basecoat material is applied, first at least one primer and then at least one surfacer are applied to the substrate.

12. Method according to either of Claims 10 and 11, **characterized in that** a metallic substrate or a plastic substrate is used as substrate.

13. Method according to Claim 10, **characterized in that** the substrate from stage (1) is a multicoat paint system which possesses defect sites.

14. Multicoat paint system producible by a method according to any of Claims 10 to 13.

15. Use of a coating composition according to any of Claims 1 to 9 for improving the mechanical properties of multicoat paint systems.

## Revendications

1. Revêtement pigmenté, à base de solvant, **caractérisé en ce qu'**il contient, par rapport à la quantité totale du revêtement, 0,02 à 0,75 % en poids d'au moins un copolymère (A), le copolymère (A) pouvant être obtenu par copolymérisation d'un mélange de monomères oléfiniquement insaturés (a) dans au moins un solvant organique, le mélange de monomères (a) devant être polymérisé étant constitué de
(a1) 10 à 60 % en moles d'au moins un monomère de formule suivante (I) 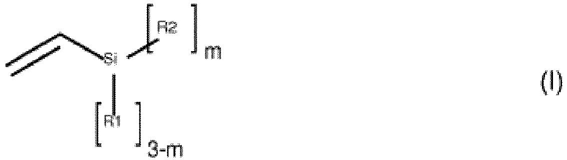 avec
R₁ = C₁₋₄-alcoxy, R₂ = C₁₋₄-alkyle et m = 0 à 2,
ainsi que
(a2) 40 à 90 % en moles d'au moins un autre monomère oléfiniquement insaturé et le copolymère (A) possédant une température de transition vitreuse Tᵥ d'au moins -30 °C.

2. Revêtement selon la revendication 1, **caractérisé en ce qu'**il contient (B) au moins un polymère d'acrylate, un polymère de type polyuréthane et/ou un polyester en tant que liant.

3. Revêtement selon la revendication 2, **caractérisé en ce que** le liant (B) présente un indice d'OH de 15 à 350 mg de KOH/g.

4. Revêtement pigmenté, à base de solvant selon l'une quelconque des revendications 2 et 3, **caractérisé en ce qu'**en tant que liant (B) au moins un polyester est contenu.

5. Revêtement selon l'une quelconque des revendications 1 à 4, **caractérisé en ce qu'**au moins un pigment de plaquettes d'aluminium est contenu en tant que pigment.

6. Revêtement selon l'une quelconque des revendications 1 à 5, **caractérisé en ce que** la proportion de l'au moins un copolymère (A), par rapport à la quantité totale du revêtement, est de 0,03 à 0,5 % en poids.

7. Revêtement selon l'une quelconque des revendications 1 à 6, **caractérisé en ce que** les monomères (a2) sont choisis à raison d'au moins 80 % en moles, préférablement à raison de 100 % en moles, dans le groupe constitué par les monomères des formules H₂C=CH₂-(C=O)-O-Rₓ, H₂C=CH(CH₃)-(C=O)-O-Rₓ ainsi que H₂C=CH₂-O-(C=O)-Rₓ, Rₓ étant un radical alkyle comportant 1 à 20, préférablement 1 à 10 atome(s) de carbone.

8. Revêtement selon la revendication 7, **caractérisé en ce que** mis à part les copolymères (A), qui peuvent être obtenus par l'utilisation d'au moins 80 % en moles, préférablement de 100 % en moles, de monomères (a2) choisis dans le groupe constitué par les monomères des formules H₂C=CH₂-(C=O)-O-Rₓ, H₂C=CH(CH₃)-(C=O)-O-Rₓ ainsi que H₂C=CH₂-O-(C=O)-Rₓ, Rₓ étant un radical alkyle comportant 1 à 20, préférablement 1 à 10 atome(s) de carbone, aucun autre copolymère (A) n'est contenu.

9. Revêtement selon l'une quelconque des revendications 1 à 8, **caractérisé en ce que** l'au moins un copolymère (A) possède une température de transition vitreuse Tᵥ de -25 à 50 °C.

10. Procédé pour la préparation d'un vernis multicouche, dans lequel
(1) au moins un vernis de base est appliqué sur un substrat,
(2) un film de polymère est formé à partir du vernis de base appliqué dans l'étape (1),
(3) au moins un vernis transparent est appliqué sur la couche de vernis de base ainsi obtenue est ensuite
(4) la couche de vernis de base est durcie conjointement avec le vernis transparent appliqué dans l'étape (3),
**caractérisé en ce qu'**un revêtement selon l'une quelconque des revendications 1 à 9 est utilisé en tant que vernis de base et une couche de vernis transparent étant la couche supérieure du vernis multicouche.

11. Procédé selon la revendication 10, **caractérisé en ce qu'**avant l'application du vernis de base, au moins un apprêt et ensuite au moins une charge sont d'abord appliqués sur le substrat.

12. Procédé selon l'une quelconque des revendications 10 et 11, **caractérisé en ce qu'**un substrat métallique ou un substrat de plastique est utilisé en tant que substrat.

13. Procédé selon la revendication 10, **caractérisé en ce que** le substrat de l'étape (1) est un vernis multicouche qui possède des défauts.

14. Vernis multicouche pouvant être préparé par un procédé selon l'une quelconque des revendications 10 à 13.

15. Utilisation d'un revêtement selon l'une quelconque des revendications 1 à 9 pour l'amélioration des caractéristiques mécaniques de vernis multicouches.
